# EUROPEAN PATENT SPECIFICATION

(11) **EP 4 196 366 B1**
(45) Date of publication and mention of the grant of the patent: **27.03.2024**
(21) Application number: 21802845.4
(22) Date of filing: 27.09.2021
(51) Int. Cl.: B60L 53/14, B60L 53/30, B60L 53/66, B60L 53/67

(54) **SYSTEM AND METHOD FOR VEHICLE-SIDE CONTROL OF A MULTI-PILE CHARGING SESSION**
SYSTEM UND VERFAHREN ZUR FAHRZEUGSEITIGEN STEUERUNG EINER MULTI-PILE-LADESITZUNG
SYSTÈME ET PROCÉDÉ DE COMMANDE CÔTÉ VÉHICULE D'UNE SESSION DE CHARGE MULTI-PILE

(30) Priority: 28.09.2020 TH 2001005629
(43) Date of publication of application: 21.06.2023
(73) Proprietor: Mine Mobility Research Co., Ltd., Bangkok 10400 (TH)
(72) Inventor: AHUNAI, Somphote, Bangkok, 10110 (TH); PAN, Wen Wu, Shenzhen, Shiyan Town, Bao'an District (CN); LIU, Gang, Shenzhen, Shiyan Town, Bao'an District (CN); DENG, Xiao Meng, Shenzhen, Shiyan Town, Bao'an District (CN); CHENG, Hang Hang, Shenzhen, Shiyan Town, Bao'an District (CN); LI, Jian Hua, Shenzhen, Shiyan Town, Bao'an District (CN); LUO, Xian Kai, Shenzhen, Shiyan Town, Bao'an District (CN); ZHANG, Si Yuan, Shenzhen, Shiyan Town, Bao'an District (CN)
(74) Representative: Mewburn Ellis LLP
(86) International application number: PCT/TH2021/000057
(87) International publication number: WO 2022/066107

(56) References cited:
- WO-A1-2011/065037
- WO-A1-2018/190796
- CN-A- 108 248 434
- US-A1- 2011 241 824
- US-A1- 2013 041 531
- US-A1- 2017 117 723
- US-A1- 2018 304 759
- US-A1- 2019 389 315
- US-A1- 2020 122 593
- US-A1- 2020 125 052

## Description

### TECHNICAL CONTRIBUTION

The present disclosure relates to electric vehicle charging. More particularly, the present disclosure relates to vehicle-side control of a multi-pile charging session comprising independent charging sessions.

### BACKGROUND

Charging piles of a charging substation are used for the controlled transfer of electrical power to electrical vehicles during charging sessions. Charging piles can be used in a commercial setting, wherein customers use the charging pile to charge their electric vehicle at a charging facility hosting one or more charging substations. To effect billing and authorization of each charging session, the charging piles are often in data communication with a server through a network. The server typically includes a database including vehicle records for the customers and meter records documenting each charging session performed by the charging piles. During the initiation stage of the charging session, a vehicle identifier for the electric vehicle is typically sent to the server. In the shutdown stage of the charging session, the final power delivery totals are stored in the meter records of the server's database. The server is thereafter accessed by the vendor to conduct customer billing procedures for charging sessions.

Charging ports on the electric vehicles are connected to charging connectors of the charging pile, often through an umbilical line spanning the distance therebetween. Industry standards typically dictate: (i) dimensions of the charging connectors and charging ports; (ii) voltage ranges for the charging piles; and (iii) current ranges for the charging piles. Widely implemented industry standards for the charging piles and initiation of separate charging sessions are included within ISO 15118/DIN 70121 and the national standard GB/T27930-2015. Charging piles following these standards can be used for many types of electric vehicles (typically passenger cars, buses, ferries, trolleys, and trains).

Use of a single charging pile may be sufficient for the charging session of a passenger car. But larger electric vehicles such as buses, ferries, trolleys, and trains require significant power transfer to their on-board battery which cannot be supplied in a reasonable time by a single charging pile. Each charging pile has by itself a limited power transfer rate (related to its maximum voltage and current range), therefore larger electric vehicles are often charged simultaneously from multiple charging piles housed in a charging substation. These charging sessions simultaneously using multiple charging piles are often called dual-gun charging sessions, multiple-gun charging sessions, or multi-pile charging sessions.

An example publication for multi-pile charging sessions is Chinese Patent Application No. CN109760545A, dated 17 May 2019 and entitled "Charging Method and Charging Device". This publication describes the use of multiple charging piles of a charging substation to simultaneously charge an electric vehicle in a multi-pile charging session. One of the charging piles of the charging substation is designated the master charging pile. The master charging pile of the charging substation controls both its own charging session and the charging sessions of the other charging piles (designated "slave" charging piles) of the same charging substation. Hence, coordination of the separate charging sessions for each of the charging piles of the charging substation is performed by the master charging pile of the charging substation. While CN109760545A presents a method to coordinate the multi-pile charging session, it requires both a hardware modification (e.g., dedicated communication lines between each of the charging piles of the charging substation) and a software modification to the standardized communication protocols (e.g., to override the need for specific protocol messaging between the electric vehicle and the slave charging pile through the slave charging port).

This need for dedicated hardware communication links and software driven coordination between charging piles of a charging substation in the prior art can lead to compatibility issues. As a first matter, issues with incompatibility between legacy charging piles and newly acquired charging piles in the same charging substation are likely to arise over time, even if equipment initially purchased for the charging substation was fully functional at the time of initial set up. For instance, the newly purchased equipment may be a different model number or purchased from a different manufacturer entirely.

As a second matter, in the event of malfunction of one charging pile, the operation of other charging piles may also be affected due to communication error signals. For instance, faults detected during initiation of the charging piles of the charging substation could halt the entire multi-pile charging session.

As a third matter, a large charging facility may support multiple charging substations operated by different vendors. These multiple charging substations may be unconnected to each other. The master/slave protocols of the prior art assumes that the master charging pile and the slave charging pile are operated by the same vendor (and hence only require a single authorization from the vendor routed through the master charging pile). Thus, an electric vehicle would be unable to perform a multi-pile charging session using charging piles selected from the charging substations of multiple vendors located at the same charging facility.

What is needed therefore is a system and method for conducting multi-pile charging sessions with charging piles operating under the unmodified standardized communication protocols such that there is no need for either: (i) a set of dedicated communication lines between each of the charging piles; or (ii) any software driven coordination between the charging piles of the charging substation.

US2020/122593A1, Noh et, al entitled "Vehicle and Method for Controlling the same" discloses a vehicle and a method for controlling the vehicle. The vehicle may include multiple charging ports electrically coupled to a first connector and a second connector. Each of the first and second connectors is configured to receive power from one or more charger; and a controller is configured to receive a charging start command and, upon receiving the charging start command, to control operation of the vehicle to be sequentially paired with the first connector and the second connector when the first connector and the second connector are electrically coupled to the multiple charging ports.

WO2011/062037A1, Anegawa et al entitled "Charging System, Charger, Electric Movable Body, and Method for Charging Battery for Electric Movable Body" discloses a technique that is capable of more reliably starting and completing a charging control sequence even when a communication error occurs due to noise and that is also capable of reliably opening a relay except for during charging. In addition to charging lines used for supplying charging power from a charger to an electric vehicle and communication lines used for exchanging a charging current specification value between the charger and the electric! vehicle, there are provided driving power supply lines used for supplying driving power from a control-system power supply to a relay disposed between the charging line and an in-vehicle battery. By controlling the conduction patterns of the driving power supply line not only the relay is opened or closed, but also the starting and completion signals of a charging control sequence are exchanged between the charger and the electric vehicle.

US2013/041531A1, Lafrance, entitled "Vehicle Controllers and Methods for use in charging an electrically powered vehicle" discloses methods and vehicle controllers for use in charging an electrically powered vehicle. One example vehicle controller includes a memory device configured to store a user-profile and a processor electrically coupled to the memory device. The processor is programmed to detect a vehicle charging station, retrieve the user profile from the memory device, and communicate the user profile to the vehicle charging station. The user profile includes billing information.

WO2018/190796A1, Rebele et al, entitled "Battery Fleet Charging System" discloses a battery fleet charging system for charging one or more batteries simultaneously at independently controlled charge rates. The disclosed charging system can intelligently distribute an available charging power among multiple battery chargers, either symmetrically or asymmetrically. as specified by a central controller to regulate the power used by each battery charger.

US2018/0304759A1, Chase et al, entitled "Intelligent Vehicle Charging Equipment" discloses an intelligent vehicle charging system for charging a fleet of autonomous vehicles throughout a network of charging stations dispersed throughout a geographic area. The intelligent vehicle charging system includes a remote control system that is in operative communication with each of the autonomous vehicles in the fleet and each of the charging stations in the network. When an autonomous vehicle is in need of a power charge, or as directed by the remote control system, the remote control system will identify an available charging station, guide the autonomous vehicle to the charging station, verify that the autonomous vehicle has arrived at the charging station, initiate the power charging process, account and bill appropriate fees for the charging process, and log all associated activity. The remote control system is also capable of remotely and instantaneously terminating the power charging process to dynamically return a vehicle back to service.

CN 108248434A, entitled "Electric vehicle charge control method and device" discloses a charging control method and device for an electric vehicle. The electric vehicle includes two charging interfaces. The two charging interfaces are used to connect to two charging guns of a charging pile. And the two charging interfaces are respectively connected to a battery management system through two CAN lines. The method includes detecting whether the two charging guns of the charging pile are physically connected to the two charging interfaces. If so, the method includes establishing a communication connection between the battery management system and the charging pile through the two CAN lines: sending the charging demand to the charging pile through the two CAN lines so that the charging pile can simultaneously charge the electric vehicle through the two charging guns according to the charging demand. The charging requirements include at least charging voltage requirements and charging current requirements. The two charging guns of the charging pile can be controlled to simultaneously charge the same electric vehicle through the two CAN lines, which solves the problem of slow charging.

US2011/241824A1, Uesugi, entitled "IN-vehicle Mount Type Battery Charging System, Managing Server, Managing Server Control Method and Computer-readable Medium Storing Program for Managing Server" discloses an in-vehicle mount type battery charging system including a charging station having a charger for charging an in-vehicle mount battery of an electric vehicle, and a managing server connected to the charger. The managing server receives registration for enabling use of the charger from a user, authenticates the user when the user uses the charger and allows the user to use the charger when the user is authenticated as a registered member. Furthermore, the managing server receives temporary registration for temporarily enabling use of the charger from a user as a nonmember, authenticates the user when the user uses the charger and temporarily allows the user to use the charger when the user is authenticated as a registered temporary member.

US2020/125052, Jeong, entitled "Power Supply Apparatus and System, and Method for using the same" discloses a power supply apparatus for supplying power to an external electric device. The power supply apparatus includes a power outlet unit to which a power plug of the external electric device is coupled, to supply electricity to the external electric device; a power control unit controlling power supply from the power outlet unit to the external electric device; and a user interface unit connected to the power control unit to receive a power activation code from a user, wherein the power control unit supplies power from the power outlet unit to the external electric device during a usage period, corresponding to the power activation code.

### SUMMARY

In its most general form, the invention is a system or method for vehicle-side control of a multi-pile charging session, the system comprising: (a) a plurality of charging piles, each charging pile including a supply equipment communication controller (SECC); and (b) a vehicle electrical system for an electric vehicle with a master battery control unit (MBCU) in data communication with a plurality of battery control units (BCU). The MBCU is configured to coordinate two or more independent charging sessions through the BCUs during each multi-pile charging session. Each independent charging session is managed with an independent protocol message exchange through a BCU-to-SECC communication pathway.

In more detail, a first embodiment of the invention is a system for vehicle-side control of a multi-pile charging session, the system comprising: (a) a plurality of charging piles; and (b) a vehicle electrical system for an electric vehicle. Each charging pile comprises: (i) a power line electrically connected to a power connector at a first end and to a charging connector at a second end; and (ii) a supply equipment communication controller (SECC). The power line is connectable to a utility line. The power line includes a relay switch positioned between the power connector and the charging connector. A charging pile power line communication module (CP-PLC) is positioned adjacent the power line between the relay switch and the charging connector. The SECC is in data communication with the relay switch and the CP-PLC. Current is permitted to flow from the utility line to the charging connector through the power line, upon activation of the relay switch by the SECC. The vehicle electrical system includes: (i) a battery including a plurality of battery management units (BMUs) and a plurality of battery cells; (ii) a busbar relay in electrical connection to the battery cells via at least one busbar battery trunk; (iii) a plurality of charging ports; (iv) a plurality of busbar input trunks; and (v) a master battery control unit (MBCU). Each charging port is configured for electrical connection to the charging connector of one of the charging piles. The charging port is directly electrically connected to the charging connector or the charging port is indirectly electrically connected to the charging connector through an umbilical line. Each busbar input trunk is electrically connected to one of the charging ports at a first junction and to the busbar relay at a second junction. Each busbar input trunk is in data communication with an electric vehicle power line communication module (EV-PLC) positioned adjacent the busbar input trunk between the charging port associated with the busbar input trunk and the busbar relay. The MBCU is in data communication with a plurality of battery control units (BCU), the BMUs of the battery, the busbar relay, and a user interface device. Each BCU is paired in data communication with one of the EV-PLCs to establish a BCU-to-SECC communication pathway for the BCU upon a connective pairing of the charging port associated with the BCU and one of the charging connectors. The BCU-to-SECC communication pathway for each BCU passes from the BCU to the EV-PLC associated with the BCU, to the busbar input trunk associated with the EV-PLC, to the connectively paired charging port associated with the busbar input trunk, to the connectively paired charging connector associated with the connectively paired charging port, to the power line associated with the connectively paired charging connector, to the CP-PLC associated with the power line, and to the SECC associated with the CP-PLC. The MBCU is configured to: (a) coordinate two or more independent charging sessions during each multi-pile charging session to charge the battery cells simultaneously through two or more charging ports according to a multi-pile charging plan; and (b) manage each independent charging session with an independent protocol message exchange through each BCU-to-SECC communication pathway, from the BCU of the BCU-to-SECC communication pathway to the SECC of the BCU-to-SECC communication pathway. Each independent charging session includes an initiation stage, a charging stage, and a shutdown stage conducted through the associated BCU-to-SECC communication pathway; and wherein during the initiation stage of each independent charging session, the independent protocol message exchange conducted through the BCU-to-SECC communication pathway includes: delivery of the vehicle identifier of the electric vehicle from the BCU to the SECC, wherein the SECC forwards the vehicle identifier to the server with an authorization request for the independent charging session; wherein the server accesses the account status of the vehicle record associated with the vehicle identifier to, if so authorized, issue an authorization approval for the independent charging session; and wherein the server return delivers the authorization approval to the SECC; delivery of a charging port identifier for the BCU-to-SECC communication pathway; return delivery of the authorization approval of the independent charging session from the SECC to the BCU; and delivery of a set of parameters for the charging pile associated with the BCU-to-SECC communication pathway, each set of parameters including an output voltage range and a maximum transfer current; and (c) a server in data communication with the SECC of each charging pile through a network, the server including a database comprising a plurality of vehicle records and a plurality of meter records, (i) wherein each vehicle record includes, for each of a plurality of vehicles, a vehicle identifier, an account status and two or more charging port identifiers for the electric vehicle; (ii) wherein each meter record identifies at least one vehicle identifier and a charging session summary for each multi-pile charging session; and (iii) wherein the charging session summary for each multi-pile charging session includes a listing of the charging port identifiers for the charging piles utilized in the multi-pile charging session.

A second embodiment of the invention is a computer-implemented method for vehicle-side control of a multi-pile charging session, the method comprising the steps of: (a) maintaining a plurality of charging piles; (b) maintaining a vehicle electrical system for an electric vehicle; (c) coordinating with the MBCU two or more independent charging sessions during each multi-pile charging session to charge the battery cells simultaneously through two or more charging ports according to a multi-pile charging plan; and (d) managing with the MBCU each independent charging session with an independent protocol message exchange through each BCU-to-SECC communication pathway, from the BCU of the BCU-to-SECC communication pathway to the SECC of the BCU-to-SECC communication pathway, wherein each independent charging session includes an initiation stage, a charging stage, and a shutdown stage conducted through the associated BCU-to-SECC communication pathway. Each charging pile includes: (i) a power line electrically connected to a power connector at a first end and to a charging connector at a second end; and (ii) a supply equipment communication controller (SECC). The power line is connectable to a utility line. The power line includes a relay switch positioned between the power connector and the charging connector. A charging pile power line communication module (CP-PLC) is positioned adjacent the power line between the relay switch and the charging connector. The SECC is in data communication with the relay switch and the CP-PLC. Current is permitted to flow from the utility line to the charging connector through the power line, upon activation of the relay switch by the SECC. The vehicle electrical system includes: (i) a battery including a plurality of battery management units (BMUs) and a plurality of battery cells; and (ii) a busbar relay in electrical connection to the battery cells via at least one busbar battery trunk; (iii) a plurality of charging ports; (iv) a plurality of busbar input trunks; and (v) a master battery control unit (MBCU). Each charging port is configured for electrical connection to the charging connector of one of the charging piles. The charging port is directly electrically connected to the charging connector or the charging port is indirectly electrically connected to the charging connector through an umbilical line. Each busbar input trunk is electrically connected to one of the charging ports at a first junction and to the busbar relay at a second junction. Each busbar input trunk is in data communication with an electric vehicle power line communication module

(EV-PLC) positioned adjacent the busbar input trunk between the charging port associated with the busbar input trunk and the busbar relay. The MBCU is in data communication with a plurality of battery control units (BCU), the BMUs of the battery, the busbar relay, and a user interface device. Each BCU is paired in data communication with one of the EV-PLCs to establish a BCU-to-SECC communication pathway for the BCU upon a connective pairing of the charging port associated with the BCU and one of the charging connectors. The BCU-to-SECC communication pathway for each BCU passes from the BCU to the EV-PLC associated with the BCU, to the busbar input trunk associated with the EV-PLC, to the connectively paired charging port associated with the busbar input trunk, to the connectively paired charging connector associated with the connectively paired charging port, to the power line associated with the connectively paired charging connector, to the CP-PLC associated with the power line, and to the SECC associated with the CP-PLC; wherein during the initiation stage of each independent charging session, the independent protocol message exchange conducted through the BCU-to-SECC communication pathway includes: delivery of the vehicle identifier of the electric vehicle from the BCU to the SECC, wherein the SECC forwards the vehicle identifier to the server with an authorization request for the independent charging session; wherein the server accesses the account status of the vehicle record associated with the vehicle identifier to, if so authorized, issue an authorization approval for the independent charging session; and wherein the server return delivers the authorization approval to the SECC; delivery of a charging port identifier for the BCU-to-SECC communication pathway; return delivery of the authorization approval of the independent charging session from the SECC to the BCU; and delivery of a set of parameters for the charging pile associated with the BCU-to-SECC communication pathway, each set of parameters including an output voltage range and a maximum transfer current; (e) maintaining a server in data communication with the SECC of each charging pile through a network, the server including a database comprising a plurality of vehicle records and a plurality of meter records, wherein each vehicle record includes, for each of a plurality of vehicles, a vehicle identifier, an account status and two or more charging port identifiers for the electric vehicle; wherein each meter record identifies at least one vehicle identifier and a charging session summary for each multi-pile charging session; and wherein the charging session summary for each multi-pile charging session includes a listing of the charging port identifiers for the charging piles utilized in the multi-pile charging session.

Technical objects of the invention include: (a) coordination of independent charging sessions of a multi-pile charging sessions without need of a dedicated communication line between each of the charging piles of the charging substation; and (b) coordination of independent charging sessions of a multi-pile charging sessions without need of specialized software protocols in the charging substation enabling master/slave coordination during multi-pile charging sessions. Hence, the invention enables multi-pile charging sessions using standard infrastructure (e.g., independent charging sessions conducted by the charging piles of a charging substations that have not be modified to enable coordination of multi-pile charging sessions using hardware and software modifications diverging from the industry standard).

The invention overcomes the need for compatibility between legacy charging piles and newly acquired charging piles installed on the same charging substation. The invention only requires the basic compliance of the charging piles with the industry standards. No communication or coordination between the charging piles is required within the charging substation. Charging piles purchased from different vendors or a mixture of charging pile model numbers will not affect the performance of the invention.

The invention is also better able to overcome malfunctions of one of the charging piles of a charging substation. The invention separately initializes the BCU-to-SECC communication pathway of each independent charging session using an independent protocol message exchange. This approach reduces the interdependencies between the charging piles. Each charging pile of the charging substation is only required to maintain minimum compliance with the industry standard. If one charging pile of a charging substation malfunctions and cannot comply with the industry standard, then another charging pile from the charging substation (or even another charging substation) can be swapped in to replace the malfunctioning charging pile.

The invention also supports multi-pile charging sessions using charging piles from different charging substations. For instance, with the invention, a first independent charging session of a multi-pile charging session can be initialized from a first vendor through a first customer account hosted by a first server through a first charging pile of a first charging substation. A second independent charging session of a multi-pile charging session can be initialized from a second vendor through a second customer account (for the same customer) hosted by a second server through a second charging pile of a second charging substation.

Hence, the invention represents and improvement over the prior art by: (a) reducing the impact of incompatibility issues between legacy charging piles and newly acquired charging piles; (b) reducing the impact of a malfunction of one of the charging piles of charging substation upon a multi-pile charging session; and (c) enabling use of charging piles from separate charging sub-stations of a charging facility, even where those charging sub-stations are managed by different vendors.

### BRIEF DESCRIPTION OF THE DRAWINGS

Embodiments of the present disclosure are described herein with reference to the drawings in which:
**FIG. 1** is a block diagram representing the system in an embodiment of the invention.
**FIG. 2** is a simplified block diagram representing the system in an embodiment of the invention with focus on the BCU-to-SECC communication pathway.
**FIG. 3** is a simplified block diagram representing the system in an embodiment of the invention with focus on the electrical power transfer pathways between a charging pile and an electric vehicle.
**FIG.4** is a flowchart of steps taken in an embodiment of the invention.

### DETAILED DESCRIPTION

In the following detailed description, reference is made to the accompanying drawings, which form a part hereof. The illustrative embodiments described in the detailed description, drawings and claims are not meant to be limiting. Other embodiments can be utilized, and other changes can be made, without departing from the spirit or scope of the subject matter presented herein. Unless specified otherwise, the terms "comprising," "comprise," "including" and "include" used herein, and grammatical variants thereof, are intended to represent "open" or "inclusive" language such that they include recited elements but also permit inclusion of additional, un-recited elements.

As used herein, the software and hardware of a "server" may be implemented within: a single stand-alone computer, a stand-alone server, multiple dedicated servers, and/or a virtual server running on a larger network of servers and/or a cloud-based service. As used herein, a "database" may store data to and access data from a single stand-alone computer, a data server, multiple dedicated data servers, a cloud-based service, and/or a virtual server running on a network of servers.

As used herein, a "user interface device" may be implemented by a display monitor, a keyboard, a mouse, a touch screen, a touch pad, and/or a computing device including a processor and software. The user interface device may be configured as a laptop, a smart phone, a tablet, a single stand-alone computer, or a customized user interaction device of a vehicle control unit.

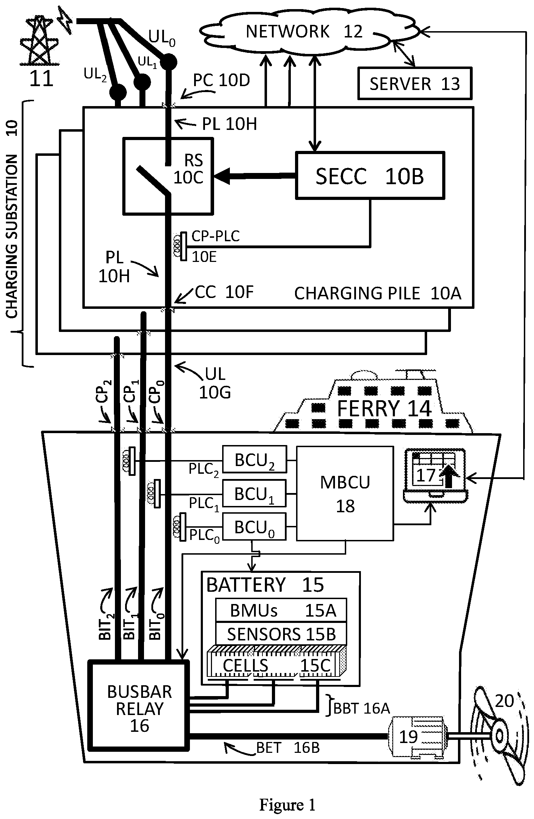

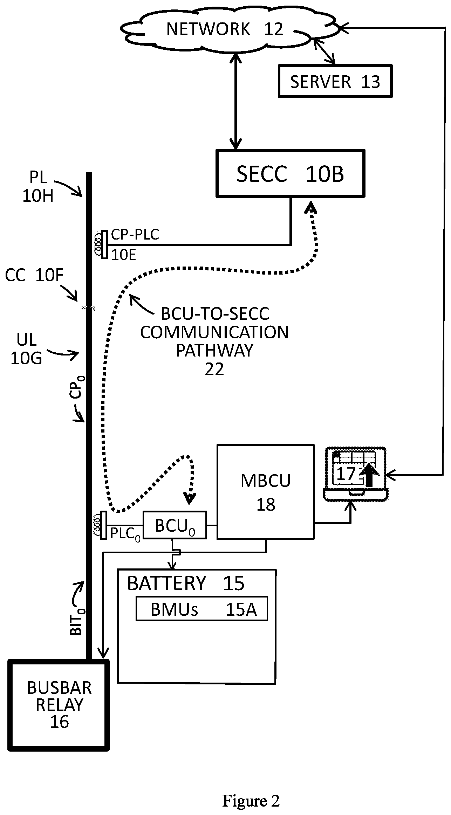

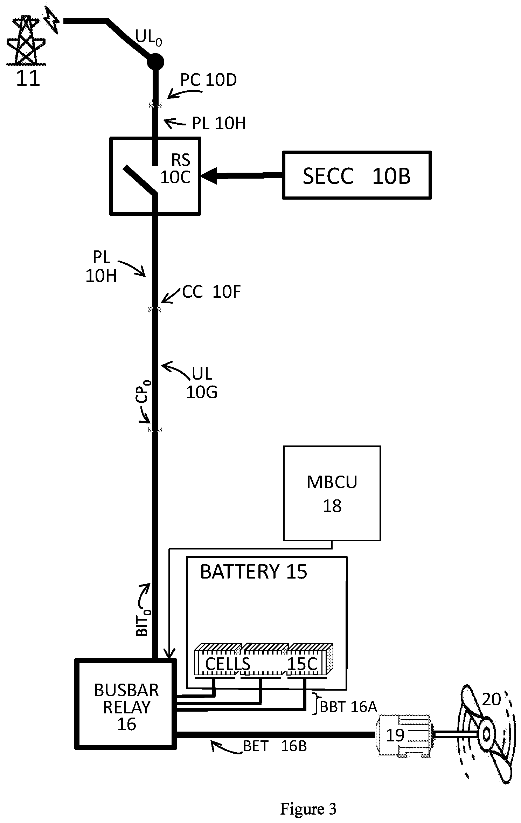

**FIG. 1** is a block diagram representing the system in an embodiment of the invention comprising a server **13,** a network **12,** a plurality of charging piles **10A,** and a ferry **14.** Details of **FIG. 1** focused on the data communication of this same system are depicted in **FIG. 2****.** Details of **FIG. 1** focused on the pathway of current from a utility provider **11** to the battery cells **15C** are depicted in **FIG. 3****.**

Note that while **FIG. 1** depicts use of the invention with a ferry **14,** the invention is applicable to any type of electrical vehicle benefiting from a multi-pile charging session. E.g., the invention can also be used for buses, trolleys, and trains.

As depicted in **FIG. 1****,** a charging substation includes three charging piles **10A.** Each charging pile **10A** (represented in **FIG. 1** as the topmost represented charging pile **10A**) includes a power line **10H** connected to a power connector **10D** at a first end and a charging connector **10F** at a second end. Between the power connector **10D** and the charging connector **10F,** the power line **10H** includes a relay switch **10C** controlled by a supply equipment communication controller (SECC) **10B.** Each power connector **10D** is connected electrically to a utility line (**UL₀, UL₁**, **UL₂**), which are connected to the utility provider **11.** The SECC **10B** is in data communication with a server **13** through a network **12.** The SECC **10B** is also in data communication with the power line **10H** through a charging pile power line communication module (hereafter "CP-PLC") **10E.** While **FIG. 1** depicts three charging piles **10A** in the charging substation **10,** the invention can use two or more charging piles **10A** for each multi-pile charging session; these charging piles **10A** can be located within the same charging sub-station **10** or in separate charging substations **10.**

As depicted in **FIG. 1** and **FIG. 3** the electric vehicle of the invention is a ferry **14** with an electric motor **19** powering a ship propeller **20.** The electric motor **19** is powered by the battery cells **15C** of a battery **15,** with a current passing: (i) from the battery cells **15C** to a busbar relay **16** through a busbar battery trunk **16A;** and (ii) from the busbar relay **16** to the electric motor **19** through a busbar engine trunk **16B.** Charging current from a power line **10H** of each charging pile **10A** of the charging substation **10** passes into the ferry **14** from charging connector **10F** of the charging pile **10A** to the charging port (**CP₀**, **CP₁**, **CP₂**) of ferry **14** through an umbilical line **10G.** The battery **15** includes a plurality of battery management units (BMUs) **15A,** a plurality of battery sensors **15B,** and the battery cells **15C.** The busbar relay **16** is in electrical communication with three busbar relay trunks (**BIT₀**, **BIT₁**, **BIT₂)** connected at a first junction with the charging ports (**CP₀**, **CP₁**, **CP₂**) and to the busbar relay 16 at a second junction. Each busbar input trunk (**BIT₀**, **BIT₁**, **BIT₂)** is paired in data communication with a battery control unit (hereafter "BCU", identified in **FIGs. 1-2** as **BCU₀, BCU₁,** and **BCU₂**) through an electric vehicle power line communication module (hereafter "EV-PLC", identified in **FIGs. 1-2** as **PLC₀, PLC₁**, **PLC₂**). A master battery control unit (MBCU) **18** is in data communication with the BMUs **15A** and a plurality of battery control units. The MCBU **18** can be configured to be in data communication with the BMUs **15A** via at least one BCU (illustrated in **FIGs. 1** and **2** as **BCU₀**). While not illustrated in **FIGs. 1** and **2****,** the BMUs **15A** can collect sensor information from the battery sensors **15B;** the battery sensors **15B** can be configured to monitor current, temperature, and other parameters of the battery cells **15C.**

As most simply depicted in FIG 2, each of the three illustrated BCUs (**BCU₀**, **BCU₁, BCU₂**) is paired in data communication with one of the EV-PLCs (**PLC₀**, **PLC₁**, and **PLC₃**) to establish a BCU-to-SECC communication pathway **22** for the BCU (**BCU₀**, **BCU₁, BCU₂)** upon a connective pairing of the charging port (**CP₀**, **CP₁, CP₂**) associated with the BCU (**BCU₀**, **BCU₁**, **BCU₂**) and one of the charging connectors **10F.** The BCU-to-SECC communication pathway **22** for each BCU (**BCU₀**, **BCU₁, BCU₂)** passes from the BCU (**BCU₀**, **BCU₁**, **BCU₂)** to the EV-PLC (**PLC₀**, **PLC₁**, **PLC₂)** associated with the BCU (**BCU₀**, **BCU₁, BCU₂)**, to the busbar input trunk (**BIT₀**, **BIT₁**, **BIT₂**) associated with the EV-PLC (**PLC₀**, **PLC₁**, **PLC₂)**, to the connectively paired charging port (**CP₀**, **CP₁**, **CP₂**) associated with the busbar input trunk (**BIT₀**, **BIT₁**, **BIT₂**), to the connectively paired charging connector **10F** associated with the connectively paired charging port (**CP₀**, **CP₁, CP₂)**, to the power line **10H** associated with the connectively paired charging connector **10F,** to the CP-PLC **10E** associated with the power line **10H,** and to the SECC **10B** associated with the CP-PLC **10E.** The SECC **10B** also conducts communication with the server **13** through the network **12.** Note that the MBCU **18,** which controls each BCU (**BCU₀**, **BCU₁, BCU₂**), is in data communication with the BMUs **15A** via at least one BCU (illustrated in **FIGs. 1** and **2** as **BCU₀**), the busbar relay **16,** and the user interface device **17.** While **FIG. 1** depicts three sets of BCU-to-SECC communication pathways **22,** the invention can be implemented with two or more.

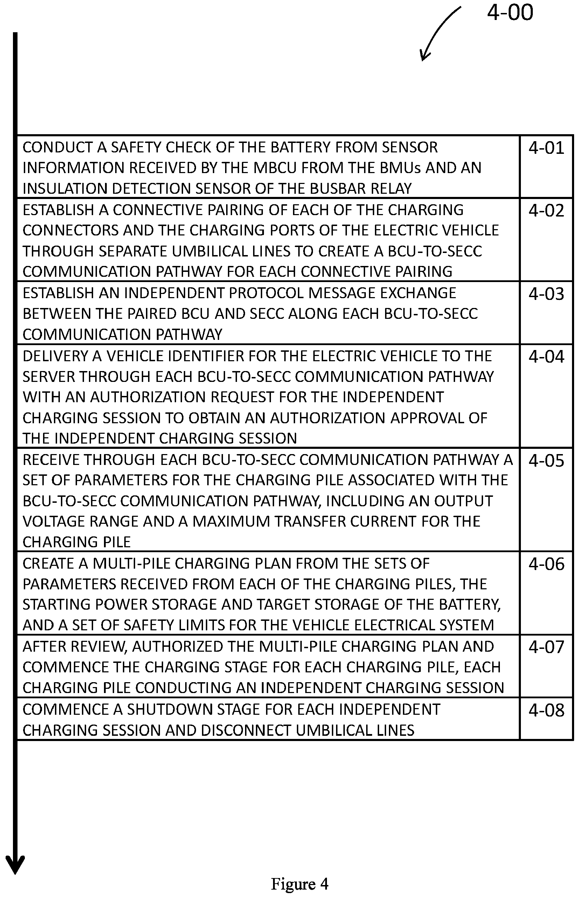

**FIG. 4** is a flowchart **4-00** of steps taken in an embodiment of the invention. Steps **4-01** to **4-08** are listed below.

| | |
|---|---|
| **4-01** | conduct a safety check of the battery **15** from sensor information received by the MBCU **18** from the BMUs **15A** and an insulation detection sensor of the busbar relay **16** |
| **4-02** | establish a connective pairing of each of the charging connectors **10F** and the charging ports (**CP₀**, **CP₁, CP₂**) of the electric vehicle through separate umbilical lines **10G** to create one BCU-to-SECC communication pathway **22** for each connective pairing |
| **4-03** | establish an independent protocol message exchange between the paired BCU (**BCU₀**, **BCU₁, BCU₂**) and SECC **10B** along each BCU-to-SECC communication pathway **22** |
| **4-04** | delivery a vehicle identifier for the electric vehicle to the server **13** through each BCU-to-SECC communication pathway **22** with an authorization request for the independent charging session to obtain an authorization approval of the independent charging session |
| **4-05** | receive through each BCU-to-SECC communication pathway **22** a set of parameters for the charging pile **10A** associated with the BCU-to-SECC communication pathway **22,** including an output voltage range and a maximum transfer current for the charging pile **10A** |
| **4-06** | create a multi-pile charging plan from the sets of parameters received from each of the charging piles **10A,** the starting power storage and target storage of the battery **15,** and a set of safety limits for the vehicle electrical system |
| **4-07** | after review, authorized the multi-pile charging plan and commence the charging stage for each charging pile **10A,** each charging pile **10A** conducting an independent charging session |
| **4-08** | commence a shutdown stage for each independent charging session and disconnect umbilical lines **10G** |

A first embodiment of the invention is a system for vehicle-side control of a multi-pile charging session, the system comprising: (a) a plurality of charging piles **10A;** and (b) a vehicle electrical system for an electric vehicle. Each charging pile **10A** comprises: (i) a power line **10H** electrically connected to a power connector **10D** at a first end and to a charging connector **10F** at a second end; and (ii) a supply equipment communication controller (SECC) **10B.** The power line **10H** is connectable to a utility line (**UL₀**, **UL₁**, **UL₂**)**.** The power line **10H** includes a relay switch **10C** positioned between the power connector **10D** and the charging connector **10F.** A charging pile power line communication module (CP-PLC) **10E** is positioned adjacent the power line **10H** between the relay switch **10C** and the charging connector **10F.** The SECC **10B** is in data communication with the relay switch **10C** and the CP-PLC **10E.** Current is permitted to flow from the utility line (**UL₀**, **UL₁, UL₂**) to the charging connector **10F** through the power line **10H,** upon activation of the relay switch **10C** by the SECC **10B.** The vehicle electrical system includes: (i) a battery **15** including a plurality of battery management units (BMUs) **15A** and a plurality of battery cells **15C;** (ii) a busbar relay **16** in electrical connection to the battery cells **15C** via at least one busbar battery trunk **16A;** (iii) a plurality of charging ports (**CP₀**, **CP₁, CP₂**); (iv) a plurality of busbar input trunks (**BIT₀**, **BIT₁, BIT₂**); and (v) a master battery control unit (MBCU) **18.** Each charging port (**CP₀**, **CP₁, CP₂**) is configured for electrical connection to the charging connector **10F** of one of the charging piles **10A.** The charging port (**CP₀**, **CP₁**, **CP₂**) is directly electrically connected to the charging connector **10F** or the charging port (**CP₀**, **CP₁**, **CP₂**) is indirectly electrically connected to the charging connector **10F** through an umbilical line **10G.** Each busbar input trunk (**BIT₀**, **BIT₁**, **BIT₂**) is electrically connected to one of the charging ports (**CP₀**, **CP₁**, **CP₂**) at a first junction and to the busbar relay **16** at a second junction. Each busbar input trunk (**BIT₀, BIT₁, BIT₂**) is in data communication with an electric vehicle power line communication module (EV-PLC) (**PLC₀**, **PLC₁, PLC₂**) positioned adjacent the busbar input trunk (**BIT₀**, **BIT₁**, **BIT₂**) between the charging port (**CP₀**, **CP₁**, **CP₂**) associated with the busbar input trunk (**BIT₀**, **BIT₁, BIT₂)** and the busbar relay **16.** The MBCU **18** is in data communication with a plurality of battery control units (BCU) (**BCU₀**, **BCU₁**, **BCU₂**), the BMUs **15A** of the battery **15,** the busbar relay **16,** and a user interface device **17.** Each BCU (**BCU₀**, **BCU₁**, **BCU₂**) is paired in data communication with one of the EV-PLCs (**PLC₀**, **PLC₁**, **PLC₂)** to establish a BCU-to-SECC communication pathway **22** for the BCU (**BCU₀**, **BCU₁**, **BCU₂)** upon a connective pairing of the charging port (**CP₀**, **CP₁**, **CP₂**) associated with the BCU (**BCU₀**, **BCU₁**, **BCU₂)** and one of the charging connectors **10F.** The BCU-to-SECC communication pathway **22** for each BCU (**BCU₀**, **BCU₁**, **BCU₂**) passes from the BCU (**BCU₀**, **BCU₁**, **BCU₂**) to the EV-PLC (**PLC₀**, **PLC₁, PLC₂)** associated with the BCU(**BCU₀**, **BCU₁**, **BCU₂**), to the busbar input trunk (**BIT₀**, **BIT₁**, **BIT₂)** associated with the EV-PLC (**PLC₀**, **PLC₁, PLC₂)**, to the connectively paired charging port (**CP₀**, **CP₁**, **CP₂**) associated with the busbar input trunk (**BIT₀**, **BIT₁**, **BIT₂**), to the connectively paired charging connector **10F** associated with the connectively paired charging port (**CP₀**, **CP₁**, **CP₂**), to the power line **10H** associated with the connectively paired charging connector **10F,** to the CP-PLC **10E** associated with the power line **10H,** and to the SECC **10B** associated with the CP-PLC **10E.** The MBCU **18** is configured to: (a) coordinate two or more independent charging sessions during each multi-pile charging session to charge the battery cells **15C** simultaneously through two or more charging ports (**CP₀**, **CP₁**, **CP₂**) according to a multi-pile charging plan; and (b) manage each independent charging session with an independent protocol message exchange through each BCU-to-SECC communication pathway **22,** from the BCU (**BCU₀**, **BCU₁**, **BCU₂**) of the BCU-to-SECC communication pathway **22** to the SECC **10B** of the BCU-to-SECC communication pathway **22.** Each independent charging session includes an initiation stage, a charging stage, and a shutdown stage conducted through the associated BCU-to-SECC communication pathway **22.**

While not illustrated in **FIGs. 1** and **2****,** sensor information from the battery sensors **15B** can be collected by the BMUs **15A.**

A second embodiment of the invention is a computer-implemented method for vehicle-side control of a multi-pile charging session, the method comprising the steps of: (a) maintaining a plurality of charging piles **10A;** (b) maintaining a vehicle electrical system for an electric vehicle; (c) coordinating with the MBCU **18** two or more independent charging sessions during each multi-pile charging session to charge the battery cells **15C** simultaneously through two or more charging ports (**CP₀**, **CP₁**, **CP₂**) according to a multi-pile charging plan; and (d) managing with the MBCU **18** each independent charging session with an independent protocol message exchange through each BCU-to-SECC communication pathway **22,** from the BCU (**BCU₀**, **BCU₁**, **BCU₂**) of the BCU-to-SECC communication pathway **22** to the SECC of the BCU-to-SECC communication pathway **22,** wherein each independent charging session includes an initiation stage, a charging stage, and a shutdown stage conducted through the associated BCU-to-SECC communication pathway **22.** Each charging pile **10A** includes: (i) a power line **10H** electrically connected to a power connector **10D** at a first end and to a charging connector **10F** at a second end; and (ii) a supply equipment communication controller (SECC) **10B.** The power line **10H** is connectable to a utility line (**UL₀**, **UL₁**, **UL₂**). The power line **10H** includes a relay switch **10C** positioned between the power connector **10D** and the charging connector **10F.** A charging pile power line communication module (CP-PLC) **10E** is positioned adjacent the power line **10H** between the relay switch **10C** and the charging connector **10F.** The SECC **10B** is in data communication with the relay switch **10C** and the CP-PLC **10E.** Current is permitted to flow from the utility line (**UL₀**, **UL₁**, **UL₂)** to the charging connector **10F** through the power line **10H,** upon activation of the relay switch **10C** by the SECC **10B.** The vehicle electrical system includes: (i) a battery **15** including a plurality of battery management units (BMUs) **15A** and a plurality of battery cells **15C;** and (ii) a busbar relay **16** in electrical connection to the battery cells **15C** via at least one busbar battery trunk **16A;** (iii) a plurality of charging ports (**CP₀**, **CP**₁, **CP₂**); (iv) a plurality of busbar input trunks (**BIT₀**, **BIT₁**, **BIT₂**); and (v) a master battery control unit (MBCU) **18.** Each charging port (**CP₀**, **CP₁**, **CP₂**) is configured for electrical connection to the charging connector **10F** of one of the charging piles **10A.** The charging port (**CP₀**, **CP₁**, **CP₂**) is directly electrically connected to the charging connector **10F** or the charging port (**CP₀**, **CP₁**, **CP₂**) is indirectly electrically connected to the charging connector **10F** through an umbilical line **10G.** Each busbar input trunk (**BIT₀**, **BIT₁**, **BIT₂)** is electrically connected to one of the charging ports (**CP₀**, **CP₁**, **CP₂**) at a first junction and to the busbar relay **16** at a second junction. Each busbar input trunk (**BIT₀**, **BIT₁, BIT₂**) is in data communication with an electric vehicle power line communication module (EV-PLC) (**PLC₀**, **PLC₁, PLC₂**) positioned adjacent the busbar input trunk (**BIT₀**, **BIT₁**, **BIT₂**) between the charging port (**CP₀**, **CP₁**, **CP₂**) associated with the busbar input trunk (**BIT₀**, **BIT₁**, **BIT₂**) and the busbar relay **16.** The MBCU **18** is in data communication with a plurality of battery control units (BCU) (**BCU₀**, **BCU₁**, **BCU₂**), the BMUs **15A** of the battery **15,** the busbar relay **16,** and a user interface device **17.** Each BCU (**BCU₀**, **BCU₁**, **BCU₂**) is paired in data communication with one of the EV-PLCs (**PLC₀**, **PLC₁**, **PLC₂**) to establish a BCU-to-SECC communication pathway **22** for the BCU (**BCU₀**, **BCU₁**, **BCU₂**) upon a connective pairing of the charging port (**CP₀**, **CP₁**, **CP₂**) associated with the BCU (**BCU₀**, **BCU₁**, **BCU₂**) and one of the charging connectors **10F.** The BCU-to-SECC communication pathway **22** for each BCU (**BCU₀**, **BCU₁**, **BCU₂**) passes from the BCU (**BCU₀**, **BCU₁**, **BCU₂**) to the EV-PLC (**PLC₀**, **PLC₁**, **PLC₂**) associated with the BCU (**BCU₀**, **BCU₁**, **BCU₂)**, to the busbar input trunk (**BIT₀**, **BIT₁**, **BIT₂**) associated with the EV-PLC (**PLC₀**, **PLC₁, PLC₂**), to the connectively paired charging port (**CP₀**, **CP₁**, **CP₂**) associated with the busbar input trunk (**BIT₀**, **BIT₁**, **BIT₂**), to the connectively paired charging connector **10F** associated with the connectively paired charging port (**CP₀**, **CP₁**, **CP₂**), to the power line **10H** associated with the connectively paired charging connector **10F,** to the CP-PLC **10E** associated with the power line **10H,** and to the SECC **10B** associated with the CP-PLC **10E.**

While not illustrated in **FIGs. 1** and **2****,** sensor information from the battery sensors **15B** can be collected by the BMUs **15A.**

In an alternate embodiment of the first and second embodiment, the user interface device **17** is integrated into a vehicle control unit of the electric vehicle. The vehicle control unit would of a ferry **14,** for instance, would typically be on the bridge of the ferry **14.**

In an alternate embodiment of the first and second embodiment, the multi-pile charging session is conducted without any data communication between the charging piles **10A** utilized in the multi-pile charging session.

This alternate embodiment clarifies that a multi-pile charging session can, for instance, be implemented using charging piles **10A** from different charging substations **10.** The multi-pile charging session can also be conducting using independent charging sessions authorized by separate vendors via communication with separate servers **13.**

In an alternate embodiment of the first and second embodiment: (a) wherein the MBCU **18** is in data communication with the BMUs **15A** via one of the BCUs **15A;** (b) wherein during the initiation stage, the MBCU **18** or the user interface device **17** conducts an initial safety check from sensor information received by the MBCU **18** from the BMUs **15A** and a plurality of busbar sensors; and (c) during the charging stage, the MBCU **18** or the user interface device **17** conducts an ongoing safety assessment from the sensor information received by the MBCU **18** from the BMUs **15A** and the busbar sensors. In this alternative embodiment, the busbar sensors can alternatively also include at least one of: (a) an insulation detection sensor; (b) a current meter; and (c) a temperature sensor.

Using the MBCU **18** to both manage the multi-pile charging session and the critical sensors used for safety checks/assessment provides the capability of a faster response to emerging safety issues. E.g., the MBCU **18** has data communication both with each of the charging piles **10A** through the BCUs (**BCU₀**, **BCU₁**, **BCU₂**) as well as access to important sensors in the battery **15** and busbar relay **16,** thus the MBCU **18** is well-positioned to initiate emergency shut-down of any independent charging session should the need arise.

As part of the first and second embodiment with a server **13,** the embodiment further includes or maintains a server **13** in data communication with the SECC **10B** of each charging pile **10A** through a network **12,** the server **13** including a database comprising a plurality of vehicle records and a plurality of meter records. Each vehicle record includes, for each of a plurality of vehicles, a vehicle identifier and an account status. Each meter record identifies at least one vehicle identifier and a charging session summary for each multi-pile charging session.

As a further part of the first and second embodiment with a server **13,** the embodiment further includes or maintains a server **13** in data communication with the SECC **10B** of each charging pile **10A** through a network **12,** the server **13** including a database comprising a plurality of vehicle records and a plurality of meter records. Each vehicle record includes, for each of a plurality of vehicles, a vehicle identifier and an account status. Each meter record identifies at least one vehicle identifier and a charging session summary for each multi-pile charging session. During the initiation stage of each independent charging session, the independent protocol message exchange conducted through the BCU-to-SECC communication pathway **22** can alternatively include: (a) delivery of the vehicle identifier of the electric vehicle from the BCU (**BCU₀**, **BCU₁**, **BCU₂**) to the SECC **10B;** (b) return delivery of the authorization approval of the independent charging session from the SECC **10B** to the BCU (**BCU₀**, **BCU₁**, **BCU₂**); and (c) delivery of a set of parameters for the charging pile **10A** associated with the BCU-to-SECC communication pathway **22,** each set of parameters including an output voltage range and a maximum transfer current. The SECC **10B** forwards the vehicle identifier to the server **13** with an authorization request for the independent charging session. The server **13** accesses the account status of the vehicle record associated with the vehicle identifier to, if so authorized, issue an authorization approval for the independent charging session. The server **13** return delivers the authorization approval to the SECC **10B.**

As a further part of the first and second embodiment with a server **13,** the embodiment further includes or maintains a server **13** in data communication with the SECC **10B** of each charging pile **10A** through a network **12,** the server **13** including a database comprising a plurality of vehicle records and a plurality of meter records. Each vehicle record includes, for each of a plurality of vehicles, a vehicle identifier and an account status. Each meter record identifies at least one vehicle identifier and a charging session summary for each multi-pile charging session. During the initiation stage of each independent charging session, the independent protocol message exchange conducted through the BCU-to-SECC communication pathway **22** can alternatively include: (a) delivery of the vehicle identifier of the electric vehicle from the BCU (**BCU₀**, **BCU₁**, **BCU₂**) to the SECC **10B;** (b) return delivery of the authorization approval of the independent charging session from the SECC **10B** to the BCU (**BCU₀**, **BCU₁**, **BCU₂**); and (c) delivery of a set of parameters for the charging pile **10A** associated with the BCU-to-SECC communication pathway **22,** each set of parameters including an output voltage range and a maximum transfer current. The SECC **10B** forwards the vehicle identifier to the server **13** with an authorization request for the independent charging session. The server **13** accesses the account status of the vehicle record associated with the vehicle identifier to, if so authorized, issue an authorization approval for the independent charging session. The server **13** return delivers the authorization approval to the SECC **10B.** The independent protocol message exchange conducted through the BCU-to-SECC communication pathway **22** during the initiation stage further includes the delivery of a charging port (**CP₀**, **CP₁**, **CP₂**) identifier for the BCU-to-SECC communication pathway **22.** Each vehicle record in the database further includes two or more charging port identifiers for the electric vehicle. The charging session summary for each multi-pile charging session includes a listing of the charging port identifiers for the charging piles **10A** utilized in the multi-pile charging session.

Especially for multi-port charging sessions, it is valuable to maintain records of which charging port (**CP₀**, **CP₁**, **CP₂**) is employed in additional to use of the vehicle identifier. This bill-keeping approach provides clarity that multiple invoice line items are related to a single multi-pile charging session. Also, if the event of excess charges related to an independent charging session using a specific charging port (**CP₀**, **CP₁**, **CP₂**), the electric vehicle owner can investigate the data communication logs and/or equipment associated with that charging port (**CP₀**, **CP₁**, **CP₂**).

In a third alternate embodiment of the first and second embodiment with a server **13,** the embodiment further includes or maintains a server **13** in data communication with the SECC **10B** of each charging pile **10A** through a network **12,** the server **13** including a database comprising a plurality of vehicle records and a plurality of meter records. Each vehicle record includes, for each of a plurality of vehicles, a vehicle identifier and an account status. Each meter record identifies at least one vehicle identifier and a charging session summary for each multi-pile charging session. During the initiation stage of each independent charging session, the independent protocol message exchange conducted through the BCU-to-SECC communication pathway **22** can alternatively include: (a) delivery of the vehicle identifier of the electric vehicle from the BCU (**BCU₀**, **BCU₁**, **BCU₂**) to the SECC **10B;** (b) return delivery of the authorization approval of the independent charging session from the SECC **10B** to the BCU (**BCU₀**, **BCU₁**, **BCU₂**); and (c) delivery of a set of parameters for the charging pile **10A** associated with the BCU-to-SECC communication pathway **22,** each set of parameters including an output voltage range and a maximum transfer current. The SECC **10B** forwards the vehicle identifier to the server **13** with an authorization request for the independent charging session. The server **13** accesses the account status of the vehicle record associated with the vehicle identifier to, if so authorized, issue an authorization approval for the independent charging session. The server **13** return delivers the authorization approval to the SECC **10B.** The user interface device **17** is in data communication with the server **13** through the network **12.** The user interface device is configured to assemble the multi-pile charging plan from at least one of (i) a custom charging plan; (ii) a preconfigured charging plan for the charging piles **10A,** wherein the preconfigured charging plan is accessible from the server **13** through the user interface device; and (iii) a prior multi-pile charging plan previously successfully performed by the electric vehicle. The custom charging plan is calculated from: (1) the sets of parameters received from the charging piles **10A** associated with the BCU-to-SECC communication pathways **22** successfully completing the initiation stage, including the output voltage range and the maximum transfer current for each charging pile **10A;** (2) a starting power storage of the battery **15;** (3) a target power storage of the battery **15;** and (4) a set of safety limits for the vehicle electrical system.

Details from prior multi-pile charging plans can be used in future multi-pile charging sessions to increase power transfer efficiency, increase battery **15** lifespan, reduce equipment failures, and increase safety. Analysis of former multi-pile charging session details can also be used to predict future power expense budgets and potentially improve future designs of the charging substations **10** and vehicle electrical systems.

In a fourth alternate embodiment of the first and second embodiment with a server **13,** the embodiment further includes or maintains a server **13** in data communication with the SECC **10B** of each charging pile **10A** through a network **12,** the server **13** including a database comprising a plurality of vehicle records and a plurality of meter records. Each vehicle record includes, for each of a plurality of vehicles, a vehicle identifier and an account status. Each meter record identifies at least one vehicle identifier and a charging session summary for each multi-pile charging session. During the initiation stage of each independent charging session, the independent protocol message exchange conducted through the BCU-to-SECC communication pathway **22** can alternatively include: (a) delivery of the vehicle identifier of the electric vehicle from the BCU (**BCU₀**, **BCU₁**, **BCU₂**) to the SECC **10B;** (b) return delivery of the authorization approval of the independent charging session from the SECC **10B** to the BCU (**BCU₀**, **BCU₁**, **BCU₂**); and (c) delivery of a set of parameters for the charging pile **10A** associated with the BCU-to-SECC communication pathway **22,** each set of parameters including an output voltage range and a maximum transfer current. The SECC **10B** forwards the vehicle identifier to the server **13** with an authorization request for the independent charging session. The server **13** accesses the account status of the vehicle record associated with the vehicle identifier to, if so authorized, issue an authorization approval for the independent charging session. The server **13** return delivers the authorization approval to the SECC **10B.** The user interface device is in data communication with the server **13** through the network **12.** The user interface device is configured to assemble the multi-pile charging plan from at least one of (i) a custom charging plan; (ii) a preconfigured charging plan for the charging piles **10A,** wherein the preconfigured charging plan is accessible from the server **13** through the user interface device; and (iii) a prior multi-pile charging plan previously successfully performed by the electric vehicle. The custom charging plan is calculated from: (1) the sets of parameters received from the charging piles **10A** associated with the BCU-to-SECC communication pathways **22** successfully completing the initiation stage, including the output voltage range and the maximum transfer current for each charging pile **10A;** (2) a starting power storage of the battery **15;** (3) a target power storage of the battery **15;** and (4) a set of safety limits for the vehicle electrical system. A safety simulation of the multi-pile charging plan is conducted by the user interface device or the server **13** prior to the charging stage. Each multi-pile charging plan includes an emergency shutdown protocol. Commencement of the charging stage requires prior review and authorization through the user interface device of the multi-pile charging plan by an authenticated user of the electric vehicle. The user interface device or the server **13** stores a sensor information log for each multi-pile charging session.

The authorization approval could be established, for instance, by requiring a login and password of the ferry captain or other trained officer of the ferry **14** to ensure proper compliance with billing and/or safety procedures of the ferry **14.** AI / ML can be used to improve future multi-pile charging plans by analysing sensor log details from electric vehicles during previous multi-pile charging sessions.

## Claims

1. A system for vehicle-side control of a multi-pile charging session, the system comprising:
(a) a plurality of charging piles, each charging pile comprising:
(i) a power line electrically connected to a power connector at a first end and to a charging connector at a second end,
(1) wherein the power line is connectable to a utility line;
(2) wherein the power line includes a relay switch positioned between the power connector and the charging connector; and
(3) wherein a charging pile power line communication module (CP-PLC) is positioned adjacent the power line between the relay switch and the charging connector;
(ii) a supply equipment communication controller (SECC),
(1) wherein the SECC is in data communication with the relay switch and the CP-PLC; and
(2) wherein current is permitted to flow from the utility line to the charging connector through the power line, upon activation of the relay switch by the SECC;
(b) a vehicle electrical system for an electric vehicle including:
(i) a battery including a plurality of battery management units (BMUs), and a plurality of battery cells;
(ii) a busbar relay in electrical connection to the battery cells via at least one busbar battery trunk;
(iii) a plurality of charging ports,
(1) wherein each charging port is configured for electrical connection to the charging connector of one of the charging piles; and
(2) wherein the charging port is directly electrically connected to the charging connector or the charging port is indirectly electrically connected to the charging connector through an umbilical line;
(iv) a plurality of busbar input trunks,
(1) wherein each busbar input trunk is electrically connected to one of the charging ports at a first junction and to the busbar relay at a second junction; and
(2) wherein each busbar input trunk is in data communication with an electric vehicle power line communication module (EV-PLC) positioned adj acent the busbar input trunk between the charging port associated with the busbar input trunk and the busbar relay; and
(v) a master battery control unit (MBCU),
(1) wherein the MBCU is in data communication with a plurality of battery control units (BCU), the BMUs of the battery, the busbar relay, and a user interface device;
(2) wherein each BCU is paired in data communication with one of the EV-PLCs to establish a BCU-to-SECC communication pathway for the BCU upon a connective pairing of the charging port associated with the BCU and one of the charging connectors;
(3) wherein the BCU-to-SECC communication pathway for each BCU passes from the BCU to the EV-PLC associated with the BCU, to the busbar input trunk associated with the EV-PLC, to the connectively paired charging port associated with the busbar input trunk, to the connectively paired charging connector associated with the connectively paired charging port, to the power line associated with the connectively paired charging connector, to the CP-PLC associated with the power line, and to the SECC associated with the CP-PLC;
(4) wherein the MBCU is configured to:
(a) coordinate two or more independent charging sessions during each multi-pile charging session to charge the battery cells simultaneously through two or more charging ports according to a multi-pile charging plan; and
(b) manage each independent charging session with an independent protocol message exchange through each BCU-to-SECC communication pathway, from the BCU of the BCU-to-SECC communication pathway to the SECC of the BCU-to-SECC communication pathway, wherein each independent charging session includes an initiation stage, a charging stage, and a shutdown stage conducted through the associated BCU-to-SECC communication pathway; and
(5) wherein during the initiation stage of each independent charging session, the independent protocol message exchange conducted through the BCU-to-SECC communication pathway includes:
delivery of the vehicle identifier of the electric vehicle from the BCU to the SECC,
wherein the SECC forwards the vehicle identifier to a server
with an authorization request for the independent charging session;
wherein the server accesses the account status of the vehicle record associated with the vehicle identifier to, if so authorized, issue an authorization approval for the independent charging session; and
wherein the server return delivers the authorization approval to the SECC;
delivery of a charging port identifier for the BCU-to-SECC communication pathway;
return delivery of the authorization approval of the independent charging session from the SECC to the BCU; and
delivery of a set of parameters for the charging pile associated with the BCU-to-SECC communication pathway, each set of parameters including an output voltage range and a maximum transfer current; and
(c) 2. the server in data communication with the SECC of each charging pile through a network, the server including a database comprising a plurality of vehicle records and a plurality of meter records,
(i) wherein each vehicle record includes, for each of a plurality of vehicles, a vehicle identifier, an account status and two or more charging port identifiers for the electric vehicle;
(ii) wherein each meter record identifies at least one vehicle identifier and a charging session summary for each multi-pile charging session; and
(iii) wherein the charging session summary for each multi-pile charging session includes a listing of the charging port identifiers for the charging piles utilized in the multi-pile charging session.

2. The system of claim 1, wherein the user interface device is integrated into a vehicle control unit of the electric vehicle.

3. The system of claim 1, wherein the multi-pile charging session is conducted without any data communication between the charging piles utilized in the multi-pile charging session.

4. The system of claim 1,
(a) wherein the MBCU is in data communication with the BMUs via one of the BCUs;
(b) wherein during the initiation stage, the MBCU or the user interface device conducts an initial safety check from sensor information received by the MBCU from the BMUs and a plurality of busbar sensors; and
(c) wherein during the charging stage, the MBCU or the user interface device conducts an ongoing safety assessment from the sensor information received by the MBCU from the BMUs and the busbar sensors.

5. The system of claim 4,
wherein the busbar sensors include at least one of:
(a) an insulation detection sensor;
(b) a current meter; and
(c) a temperature sensor.

6. The system of claim 1,
(a) wherein the user interface device is in data communication with the server through the network; and
(b) wherein the user interface device is configured to assemble the multi-pile charging plan from at least one of:
(i) a custom charging plan calculated from:
(1) the sets of parameters received from the charging piles associated with the BCU-to-SECC communication pathways successfully completing the initiation stage, including the output voltage range and the maximum transfer current for each charging pile;
(2) a starting power storage of the battery;
(3) a target power storage of the battery; and
(4) a set of safety limits for the vehicle electrical system;
(ii) a preconfigured charging plan for the charging piles, wherein the preconfigured charging plan is accessible from the server through the user interface device; and
(iii) a prior multi-pile charging plan previously successfully performed by the electric vehicle.

7. The system of claim 6,
(a) wherein a safety simulation of the multi-pile charging plan is conducted by the user interface device or the server prior to the charging stage;
(b) wherein each multi-pile charging plan includes an emergency shutdown protocol;
(c) wherein commencement of the charging stage requires prior review and authorization through the user interface device of the multi-pile charging plan by an authenticated user of the electric vehicle; and
(d) wherein the user interface device or the server stores a sensor information log for each multi-pile charging session.

8. A computer-implemented method for vehicle-side control of a multi-pile charging session, the method comprising the steps of:
(a) maintaining a plurality of charging piles, each charging pile comprising:
(i) a power line electrically connected to a power connector at a first end and to a charging connector at a second end,
(1) wherein the power line is connectable to a utility line;
(2) wherein the power line includes a relay switch positioned between the power connector and the charging connector; and
(3) wherein a charging pile power line communication module (CP-PLC) is positioned adjacent the power line between the relay switch and the charging connector; and
(ii) a supply equipment communication controller (SECC),
(1) wherein the SECC is in data communication with the relay switch and the CP-PLC; and
(2) wherein current is permitted to flow from the utility line to the charging connector through the power line, upon activation of the relay switch by the SECC;
(b) maintaining a vehicle electrical system for an electric vehicle including:
(i) a battery including a plurality of battery management units (BMUs), and a plurality of battery cells;
(ii) a busbar relay in electrical connection to the battery cells via at least one busbar battery trunk;
(iii) a plurality of charging ports,
(1) wherein each charging port is configured for electrical connection to the charging connector of one of the charging piles; and
(2) wherein the charging port is directly electrically connected to the charging connector or the charging port is indirectly electrically connected to the charging connector through an umbilical line;
(iv) a plurality of busbar input trunks,
(1) wherein each busbar input trunk is electrically connected to one of the charging ports at a first junction and to the busbar relay at a second junction; and
(2) wherein each busbar input trunk is in data communication with an electric vehicle power line communication module (EV-PLC) positioned adj acent the busbar input trunk between the charging port associated with the busbar input trunk and the busbar relay; and
(v) a master battery control unit (MBCU),
(1) wherein the MBCU is in data communication with a plurality of battery control units (BCU), the BMUs of the battery, the busbar relay, and a user interface device;
(2) wherein each BCU is paired in data communication with one of the EV-PLCs to establish a BCU-to-SECC communication pathway for the BCU upon a connective pairing of the charging port associated with the BCU and one of the charging connectors; and
(3) wherein the BCU-to-SECC communication pathway for each BCU passes from the BCU to the EV-PLC associated with the BCU, to the busbar input trunk associated with the EV-PLC, to the connectively paired charging port associated with the busbar input trunk, to the connectively paired charging connector associated with the connectively paired charging port, to the power line associated with the connectively paired charging connector, to the CP-PLC associated with the power line, and to the SECC associated with the CP-PLC;
(c) coordinating with the MBCU two or more independent charging sessions during each multi-pile charging session to charge the battery cells simultaneously through two or more charging ports according to a multi-pile charging plan; and
(d) managing with the MBCU each independent charging session with an independent protocol message exchange through each BCU-to-SECC communication pathway, from the BCU of the BCU-to-SECC communication pathway to the SECC of the BCU-to-SECC communication pathway, wherein each independent charging session includes an initiation stage, a charging stage, and a shutdown stage conducted through the associated BCU-to-SECC communication pathway;
wherein during the initiation stage of each independent charging session, the independent protocol message exchange conducted through the BCU-to-SECC communication pathway includes:
delivery of the vehicle identifier of the electric vehicle from the BCU to the SECC, wherein the SECC forwards the vehicle identifier to a server with an authorization request for the independent charging session;
wherein the server accesses the account status of the vehicle record associated with the vehicle identifier to, if so authorized, issue an authorization approval for the independent charging session; and
wherein the server return delivers the authorization approval to the SECC;
delivery of a charging port identifier for the BCU-to-SECC communication pathway;
return delivery of the authorization approval of the independent charging session from the SECC to the BCU; and
delivery of a set of parameters for the charging pile associated with the BCU-to-SECC communication pathway, each set of parameters including an output voltage range and a maximum transfer current;
and
(e) maintaining the server in data communication with the SECC of each charging pile through a network, the server including a database comprising a plurality of vehicle records and a plurality of meter records,
wherein each vehicle record includes, for each of a plurality of vehicles, a vehicle identifier, an account status and two or more charging port identifiers for the electric vehicle;
wherein each meter record identifies at least one vehicle identifier and a charging session summary for each multi-pile charging session; and
wherein the charging session summary for each multi-pile charging session includes a listing of the charging port identifiers for the charging piles utilized in the multi-pile charging session.

9. The method of claim 8, wherein the user interface device is integrated into a vehicle control unit of the electric vehicle.

10. The method of claim 8, wherein multi-pile charging session is conducted without any data communication between the charging piles utilized in the multi-pile charging session.

11. The method of claim 8:
(a) wherein the MBCU is in data communication with the BMUs via one of the BCUs;
(b) wherein during the initiation stage, the MBCU or the user interface device conducts an initial safety check from sensor information received by the MBCU from the BMUs and a plurality of busbar sensors; and
(c) wherein during the charging stage, the MBCU or the user interface device conducts an ongoing safety assessment from the sensor information received by the MBCU from the BMUs and the busbar sensors.

12. The method of claim 11, wherein the busbar sensors include at least one of:
(a) an insulation detection sensor;
(b) a current meter; and
(c) a temperature sensor.

13. The method of claim 8,
(a) wherein the user interface device is in data communication with the server through the network; and
(b) wherein the user interface device is configured to assemble the multi-pile charging plan from at least one of:
(i) a custom charging plan calculated from:
(1) the sets of parameters received from the charging piles associated with the BCU-to-SECC communication pathways successfully completing the initiation stage, including the output voltage range and the maximum transfer current for each charging pile;
(2) a starting power storage of the battery;
(3) a target power storage of the battery; and
(4) a set of safety limits for the vehicle electrical system;
(ii) a preconfigured charging plan for the charging piles, wherein the preconfigured charging plan is accessible from the server through the user interface device; and
(iii) a prior multi-pile charging plan previously successfully performed by the electric vehicle.

14. The method of claim 13,
(a) wherein a safety simulation of the multi-pile charging plan is conducted by the user interface device or the server prior to the charging stage;
(b) wherein each multi-pile charging plan includes an emergency shutdown protocol;
(c) wherein commencement of the charging stage requires prior review and authorization through the user interface device of the multi-pile charging plan by an authenticated user of the electric vehicle; and
(d) wherein the user interface device or the server stores a sensor information log for each multi-pile charging session.

## Patentansprüche

1. System zur fahrzeugseitigen Steuerung einer Mehrsäulenladesitzung, wobei das System Folgendes umfasst:
(a) eine Vielzahl von Ladesäulen, wobei jede Ladesäule Folgendes umfasst:
(i) eine Stromleitung, die elektrisch mit einem Netzverbinder an einem ersten Ende und mit einem Ladeverbinder an einem zweiten Ende verbunden ist,
(1) wobei die Stromleitung mit einer Versorgungsleitung verbindbar ist;
(2) wobei die Stromleitung einen Relaisschalter umfasst, der zwischen dem Netzverbinder und dem Ladeverbinder positioniert ist; und
(3) wobei ein Ladesäulenstromleitungskommunikationsmodul (CP-PLC) neben der Stromleitung zwischen dem Relaisschalter und dem Ladeverbinder positioniert ist;
(ii) eine Versorgungseinrichtungskommunikationssteuerung (SECC),
(1) wobei die SECC in Datenkommunikation mit dem Relaisschalter und dem CP-PLC ist; und
(2) wobei der Strom von der Versorgungsleitung durch die Stromleitung zum Ladeverbinder fließen gelassen wird, wenn der Relaisschalter von der SECC aktiviert wird;
(b) ein elektrisches Fahrzeugsystem für ein Elektrofahrzeug, das Folgendes umfasst:
(i) eine Batterie, die eine Vielzahl von Batterieverwaltungseinheiten (BMUs) und eine Vielzahl von Batteriezellen umfasst;
(ii) ein Sammelschienenrelais in elektrischer Verbindung mit den Batteriezellen über zumindest eine Sammelschienenbatterieleitung;
(iii) eine Vielzahl von Ladeanschlüssen,
(1) wobei jeder Ladeanschluss zur elektrischen Verbindung mit dem Ladeverbinder einer der Ladesäulen ausgelegt ist; und
(2) wobei der Ladeanschluss direkt elektrisch mit dem Ladeverbinder verbunden ist oder der Ladeanschluss über eine Versorgungsleitung indirekt elektrisch mit dem Ladeverbinder verbunden ist;
(iv) eine Vielzahl von Sammelschieneneingangsleitungen,
(1) wobei jede Sammelschieneneingangsleitung an einer ersten Anschlussstelle elektrisch mit einem der Ladeanschlüsse verbunden ist und an einer zweiten Anschlussstelle elektrisch mit dem Sammelschienenrelais verbunden ist; und
(2) wobei jede Sammelschieneneingangsleitung in Datenkommunikation mit einem Elektrofahrzeugstromleitungskommunikationsmodul (EV-PLC) ist, das neben der Sammelschieneneingangsleitung zwischen dem Ladeanschluss, der der Sammelschieneneingangsleitung zugeordnet ist, und dem Sammelschienenrelais positioniert ist; und
(v) eine Masterbatteriesteuereinheit (MBCU),
(1) wobei die MBCU in Datenkommunikation mit einer Vielzahl von Batteriesteuereinheiten (BCU), den BMUs der Batterie, dem Sammelschienenrelais und einer Benutzerschnittstellenvorrichtung ist;
(2) wobei jede BCU in Datenkommunikation mit einem der EV-PLCs gepaart ist, um einen BCU-zu-SECC-Kommunikationsweg für die BCU einzurichten, wenn der Ladeanschluss, der der BCU zugeordnet ist, und einer der Ladeverbinder verbindungsmäßig gepaart werden;
(3) wobei der BCU-zu-SECC-Kommunikationsweg für jede BCU von der BCU zum EV-PLC, das der BCU zugeordnet ist, zur Sammelschieneneingangsleitung, die dem EV-PLC zugeordnet ist, zum verbindungsmäßig gepaarten Ladeanschluss, der der Sammelschieneneingangsleitung zugeordnet ist, zum verbindungsmäßig gepaarten Ladeverbinder, der dem verbindungsmäßig gepaarten Ladeanschluss zugeordnet ist, zur Stromleitung, die dem verbindungsmäßig gepaarten Ladeverbinder zugeordnet ist, zum CP-PLC, das der Stromleitung zugeordnet ist, und zur SECC, die dem CP-PLC zugeordnet ist, verläuft;
(4) wobei die MBCU ausgelegt ist, um:
(a) zwei oder mehr unabhängige Ladesitzungen während jeder Mehrsäulenladesitzung zu koordinieren, um die Batteriezellen gleichzeitig über einen oder mehreren Ladeanschlüsse gemäß einem Mehrsäulenladeplan zu laden; und
(b) jede unabhängige Ladesitzung mit einem unabhängigen Protokollnachrichtenaustausch über jeden BCU-zu-SECC-Kommunikationsweg, von der BCU des BCU-zu-SECC-Kommunikationswegs zur SECC des BCU-zu-SECC-Kommunikationswegs zu verwalten, wobei jede unabhängige Ladesitzung eine Initiierungsstufe, eine Ladestufe und eine Abschaltstufe umfasst, die durch den zugeordneten BCU-zu-SECC-Kommunikationsweg ausgeführt wird; und
(5) wobei während der Initiierungsstufe jeder unabhängigen Ladesitzung jeder durch den BCU-zu-SECC-Kommunikationsweg ausgeführte unabhängige Protokollnachrichtenaustausch Folgendes umfasst:
Übermittlung des Fahrzeugidentifiaktors des Elektrofahrzeugs von der BCU zur SECC,
wobei die SECC den Fahrzeugidentifikator mit einer Autorisierungsanfrage für die unabhängige Ladesitzung an einen Server weiterleitet;
wobei der Server auf den Kontostatus des Fahrzeugdatensatzes zugreift, der dem Fahrzeugidentifikator zugeordnet ist, um bei Autorisierung eine Autorisierungsgenehmigung für die unabhängige Ladesitzung auszugeben; und
wobei der Server die Autorisierungsgenehmigung an die SECC zurückübermittelt;
Übermittlung eines Ladeanschlussidentifikators an den BCU-zu-SECC-Kommunikationsweg;
Zurückübermittlung der Autorisierungsgenehmigung der unabhängigen Ladesitzung von der SECC zur BCU; und
Übermittlung eines Satzes von Parametern für die Ladesäule, die dem BCU-zu-SECC-Kommunikationsweg zugeordnet ist, wobei jeder Satz von Parametern einen Ausgangsspannungsbereich und einen maximalen Übertragungsstrom umfasst; und
(c) den Server in Datenkommunikation mit der SECC jeder Ladesäule über ein Netzwerk, wobei der Server eine Datenbank umfasst, die eine Vielzahl von Fahrzeugdatensätzen und eine Vielzahl von Messdatensätzen umfasst,
(i) wobei jeder Fahrzeugdatensatz für jedes aus einer Vielzahl von Fahrzeugen einen Fahrzeugidentifikator, einen Kontostatus und zwei oder mehr Ladeanschlussidentifikatoren für das Elektrofahrzeug umfasst,
(ii) wobei jeder Messdatensatz zumindest einen Fahrzeugidentifikator und eine Ladesitzungszusammenfassung für jede Mehrsäulenladesitzung identifiziert; und
(iii) wobei jede Ladesitzungszusammenfassung für jede Mehrsäulenladesitzung eine Auflistung der Ladeanschlussidentifikatoren für die Ladesäulen umfasst, die in der Mehrsäulenladesitzung verwendet werden.

2. System nach Anspruch 1, wobei die Benutzerstellenvorrichtung in eine Fahrzeugsteuereinheit des Elektrofahrzeugs integriert ist.

3. System nach Anspruch 1, wobei die Mehrsäulenladesitzung ohne Datenkommunikation zwischen den Ladesäulen ausgeführt wird, die in der Mehrsäulenadesitzung verwendet werden.

4. System nach Anspruch 1,
(a) wobei die MBCU über eine der BCUs in Datenkommunikation mit den BMUs ist;
(b) wobei die MBCU oder die Benutzerschnittstellenvorrichtung während der Initiierungsphase eine anfängliche Sicherheitsüberprüfung von Sensorinformationen ausführt, die durch die MBCU von den BMUs und einer Vielzahl von Sammelschienensensoren empfangen werden; und
(c) wobei die MBCU oder die Benutzerschnittstellenvorrichtung während der Ladestufe eine laufende Sicherheitsbeurteilung von den Sensorinformationen ausführt, die durch die MBCU von den BMUX und den Sammelschienensensoren empfangen werden.

5. System nach Anspruch 4,
wobei die Sammelschienensensoren zumindest eines der Folgenden umfassen:
(a) einen Isolierungsdetektionssensor;
(b) einen Strommesser; und
(c) einen Temperatursensor.

6. System nach Anspruch 1,
(a) wobei die Benutzerschnittellenvorrichtung über das Netzwerk in Datenkommunikation mit dem Server ist; und
(b) wobei die Benutzerschnittstellenvorrichtung ausgelegt ist, um den Mehrsäulenladeplan aus zumindest einem der Folgenden zusammenzustellen:
(i) einem benutzerdefinierten Ladeplan, der aus Folgenden berechnet wird:
(1) den Parametersätzen, die von den Ladesäulen empfangen werden, die den BCU-zu-SECC-Kommunikationswegen zugeordnet sind, die die Initiierungsstufe erfolgreich abschließen, einschließlich dem Ausgabespannungsbereich und dem maximalen Übertragungsstrom für jede Ladesäule;
(2) einer Anfangsleistungsspeicherung der Batterie;
(3) einer Zielleistungsspeicherung der Batterie; und
(4) einem Satz von Sicherheitsgrenzen für das elektrische Fahrzeugsystem;
(ii) einem vorkonfigurierten Ladeplan für die Ladesäulen, wobei der vorkonfigurierte Ladeplan vom Server über die Benutzerschnittstellenvorrichtung zugänglich ist; und
(iii) einen vorherigen Mehrsäulenladeplan, der zuvor erfolgreich von Elektrofahrzeug ausgeführt wurde.

7. System nach Anspruch 6,
(a) wobei vor der Ladestufe eine Sicherheitssimulation des Mehrsäulenladeplans von der Benutzerschnittstellenvorrichtung oder dem Server ausgeführt wird;
(b) wobei jeder Mehrsäulenladeplan ein Notfallabschaltprotokoll umfasst;
(c) wobei der Beginn der Ladestufe eine vorherige Überprüfung und Autorisierung des Mehrsäulenladeplans durch einen authentifizierten Benutzer des Elektrofahrzeugs über die Benutzerschnittstellenvorrichtung erfordert; und
(d) wobei die Benutzerschnittstellenvorrichtung oder der Server ein Sensorinformationenprotokoll für jede Mehrsäulenladesitzung speichert.

8. Computerimplementiertes Verfahren zur fahrzeugseitigen Steuerung einer Mehrsäulenladesitzung, wobei das Verfahren folgende Schritte umfasst:
(a) Instandhalten einer Vielzahl von Ladesäulen, wobei jede Ladesäule Folgendes umfasst:
(i) eine Stromleitung, die elektrisch mit einem Netzverbinder an einem ersten Ende und mit einem Ladeverbinder am zweiten Ende verbunden ist,
(1) wobei die Stromleitung mit einer Versorgungsleitung verbindbar ist;
(2) wobei die Stromleitung einen Relaisschalter umfasst, der zwischen dem Netzverbinder und dem Ladeverbinder positioniert ist; und
(3) wobei ein Ladesäulenstromleitungskommunikationsmodul (CP-PLC) neben der Stromleitung zwischen dem Relaisschalter und dem Ladeverbinder positioniert ist;
(ii) eine Versorgungseinrichtungskommunikationssteuerung (SECC),
(1) wobei die SECC in Datenkommunikation mit dem Relaisschalter und dem CP-PLC ist; und
(2) wobei der Strom von der Versorgungsleitung durch die Stromleitung zum Ladeverbinder fließen gelassen wird, wenn der Relaisschalter von der SECC aktiviert wird;
(b) Instandhalten eines elektrischen Fahrzeugsystems für ein Elektrofahrzeug, das Folgendes umfasst:
(i) eine Batterie, die eine Vielzahl von Batterieverwaltungseinheiten (BMUs) und eine Vielzahl von Batteriezellen umfasst;
(ii) ein Sammelschienenrelais in elektrischer Verbindung mit den Batteriezellen über zumindest eine Sammelschienenbatterieleitung;
(iii) eine Vielzahl von Ladeanschlüssen,
(1) wobei jeder Ladeanschluss zur elektrischen Verbindung mit dem Ladeverbinder einer der Ladesäulen ausgelegt ist; und
(2) wobei der Ladeanschluss direkt elektrisch mit dem Ladeverbinder verbunden ist oder der Ladeanschluss über eine Versorgungsleitung indirekt elektrisch mit dem Ladeverbinder verbunden ist;
(iv) eine Vielzahl von Sammelschieneneingangsleitungen,
(1) wobei jede Sammelschieneneingangsleitung an einer ersten Anschlussstelle elektrisch mit einem der Ladeanschlüsse verbunden ist und an einer zweiten Anschlussstelle elektrisch mit dem Sammelschienenrelais verbunden ist; und
(2) wobei jede Sammelschieneneingangsleitung in Datenkommunikation mit einem Elektrofahrzeugstromleitungskommunikationsmodul (EV-PLC) ist, das neben der Sammelschieneneingangsleitung zwischen dem Ladeanschluss, der der Sammelschieneneingangsleitung zugeordnet ist, und dem Sammelschienenrelais positioniert ist; und
(v) eine Masterbatteriesteuereinheit (MBCU),
(1) wobei die MBCU in Datenkommunikation mit einer Vielzahl von Batteriesteuereinheiten (BCU), den BMUs der Batterie, dem Sammelschienenrelais und einer Benutzerschnittstellenvorrichtung ist;
(2) wobei jede BCU in Datenkommunikation mit einem der EV-PLCs gepaart ist, um einen BCU-zu-SECC-Kommunikationsweg für die BCU einzurichten, wenn der Ladeanschluss, der der BCU zugeordnet ist, und einer der Ladeverbinder verbindungsmäßig gepaart werden;
(3) wobei der BCU-zu-SECC-Kommunikationsweg für jede BCU von der BCU zum EV-PLC, das der BCU zugeordnet ist, zur Sammelschieneneingangsleitung, die dem EV-PLC zugeordnet ist, zum verbindungsmäßig gepaarten Ladeanschluss, der der Sammelschieneneingangsleitung zugeordnet ist, zum verbindungsmäßig gepaarten Ladeverbinder, das dem verbindungsmäßig gepaarten Ladeanschluss zugeordnet ist, zur Stromleitung, die dem verbindungsmäßig gepaarten Ladeverbinder zugeordnet ist, zum CP-PLC, das der Stromleitung zugeordnet ist, und zur SECC, die dem CP-PLC zugeordnet ist, verläuft;
(c) Koordinieren von zwei oder mehr unabhängige Ladesitzungen während jeder Mehrsäulenladesitzung zu koordinieren mit der MBCU, um die Batteriezellen gleichzeitig über einen oder mehreren Ladeanschlüsse gemäß einem Mehrsäulenladeplan zu laden; und
(d) Verwaltung, mit der MBCU, jeder unabhängigen Ladesitzung mit einem unabhängigen Protokollnachrichtenaustausch über jeden BCU-zu-SECC-Kommunikationsweg, von der BCU des BCU-zu-SECC-Kommunikationswegs zur SECC des BCU-zu-SECC-Kommunikationswegs zu verwalten, wobei jede unabhängige Ladesitzung eine Initiierungsstufe, eine Ladestufe und eine Abschaltstufe umfasst, die durch den zugeordneten BCU-zu-SECC-Kommunikationsweg ausgeführt wird;
wobei während der Initiierungsstufe jeder unabhängigen Ladesitzung jeder durch den BCU-zu-SECC-Kommunikationsweg ausgeführte unabhängige Protokollnachrichtenaustausch Folgendes umfasst:
Übermittlung des Fahrzeugidentifiaktors des Elektrofahrzeugs von der BCU zur SECC,
wobei die SECC den Fahrzeugidentifikator mit einer Autorisierungsanfrage für die unabhängige Ladesitzung an einen Server weiterleitet;
wobei der Server auf den Kontostatus des Fahrzeugdatensatzes zugreift, der dem Fahrzeugidentifikator zugeordnet ist, um bei Autorisierung eine Autorisierungsgenehmigung für die unabhängige Ladesitzung auszugeben; und
wobei der Server die Autorisierungsgenehmigung an die SECC zurückübermittelt;
Übermittlung eines Ladeanschlussidentifikators an den BCU-zu-SECC-Kommunikationsweg;
Zurückübermittlung der Autorisierungsgenehmigung der unabhängige Ladesitzung von der SECC zur BCU; und
Übermittlung eines Satzes von Parametern für die Ladesäule, die dem BCU-zu-SECC-Kommunikationsweg zugeordnet ist, wobei jeder Satz von Parametern einen Ausgangsspannungsbereich und einen maximalen Übertragungsstrom umfasst; und
(e) Halten des Servers in Datenkommunikation mit der SECC jeder Ladesäule über ein Netzwerk, wobei der Server einen Datenbank umfasst, die eine Vielzahl von Fahrzeugdatensätzen und eine Vielzahl von Messdatensätzen umfasst,
wobei jeder Fahrzeugdatensatz für jedes aus einer Vielzahl von Fahrzeugen einen Fahrzeugidentifikator, einen Kontostatus und zwei oder mehr Ladeanschlussidentifikatoren für das Elektrofahrzeug umfasst,
wobei jeder Messdatensatz zumindest einen Fahrzeugidentifikator und eine Ladesitzungszusammenfassung für jede Mehrsäulenladesitzung identifiziert; und
wobei jede Ladesitzungszusammenfassung für jede Mehrsäulenladesitzung eine Auflistung der Ladeanschlussidentifikatoren für die Ladesäulen umfasst, die in der Mehrsäulenladesitzung verwendet werden.

9. Verfahren nach Anspruch 8, wobei die Benutzerstellenvorrichtung in eine Fahrzeugsteuereinheit des Elektrofahrzeugs integriert ist.

10. Verfahren nach Anspruch 8, wobei die Mehrsäulenladesitzung ohne Datenkommunikation zwischen den Ladesäulen ausgeführt wird, die in der Mehrsäulenadesitzung verwendet werden.

11. Verfahren nach Anspruch 8,
(a) wobei die MBCU über eine der BCUs in Datenkommunikation mit den BMUs ist;
(b) wobei die MBCU oder die Benutzerschnittstellenvorrichtung während der Initiierungsphase eine anfängliche Sicherheitsüberprüfung von Sensorinformationen ausführt, die durch die MBCU von den BMUs und einer Vielzahl von Sammelschienensensoren empfangen werden; und
(c) wobei die MBCU oder die Benutzerschnittstellenvorrichtung während der Ladestufe eine laufende Sicherheitsbeurteilung von den Sensorinformationen ausführt, die durch die MBCU von den BMUX und den Sammelschienensensoren empfangen werden.

12. Verfahren nach Anspruch 11, wobei die Sammelsschienensensoren zumindest eines der Folgenden umfassen:
(a) einen Isolierungsdetektionssensor;
(b) einen Strommesser; und
(c) einen Temperatursensor.

13. Verfahren nach Anspruch 8,
(a) wobei die Benutzerschnittellenvorrichtung über das Netzwerk in Datenkommunikation mit dem Server ist; und
(b) wobei die Benutzerschnittstellenvorrichtung ausgelegt ist, um den Mehrsäulenladeplan aus zumindest einem der Folgenden zusammenzustellen:
(i) einem benutzerdefinierten Ladeplan, der aus Folgenden berechnet wird:
(1) den Parametersätzen, die von den Ladesäulen empfangen werden, die den BCU-zu-SECC-Kommunikationswegen zugeordnet sind, die die Initiierungsstufe erfolgreich abschließen, einschließlich dem Ausgabespannungsbereich und dem maximalen Übertragungsstrom für jede Ladesäule;
(2) einer Anfangsleistungsspeicherung der Batterie;
(3) einer Zielleistungsspeicherung der Batterie; und
(4) einem Satz von Sicherheitsgrenzen für das elektrische Fahrzeugsystem;
(ii) einem vorkonfigurierten Ladeplan für die Ladesäulen, wobei der vorkonfigurierte Ladeplan vom Server über die Benutzerschnittstellenvorrichtung zugänglich ist; und
(iii) einen vorherigen Mehrsäulenladeplan, der zuvor erfolgreich von Elektrofahrzeug ausgeführt wurde.

14. Verfahren nach Anspruch 13,
(a) wobei vor der Ladestufe eine Sicherheitssimulation des Mehrsäulenladeplans von der Benutzerschnittstellenvorrichtung oder dem Server ausgeführt wird;
(b) wobei jeder Mehrsäulenladeplan ein Notfallabschaltprotokoll umfasst;
(c) wobei der Beginn der Ladestufe eine vorherige Überprüfung und Autorisierung des Mehrsäulenladeplans durch einen authentifizierten Benutzer des Elektrofahrzeugs über die Benutzerschnittstellenvorrichtung erfordert; und
(d) wobei die Benutzerschnittstellenvorrichtung oder der Server ein Sensorinformationenprotokoll für jede Mehrsäulenladesitzung speichert.

## Revendications

1. Système de commande côté véhicule d'une session de charge multiborne, le système comprenant :
(a) une pluralité de bornes de recharge, chaque borne de recharge comprenant :
(i) une ligne électrique connectée électriquement à un connecteur d'alimentation à une première extrémité et à un connecteur de charge à a deuxième extrémité,
(1) dans lequel la ligne électrique peut être raccordée à une ligne secteur ;
(2) dans lequel la ligne électrique comprend un commutateur à relais positionné entre le connecteur d'alimentation et le connecteur de charge ; et
(3) dans lequel un module de communication borne de recharge-ligne électrique (CP-PLC) est positionné de façon adjacente à la ligne électrique entre le commutateur à relais et le connecteur de charge ;
(ii) un contrôleur de communication d'équipement de distribution (SECC),
(1) dans lequel le SECC est en communication de données avec le commutateur à relais et le CP-PLC ; et
(2) dans lequel un courant peut circuler de la ligne secteur au connecteur de charge par l'intermédiaire de la ligne électrique, lors de l'activation du commutateur à relais par le SECC ;
(b) un système de véhicule électrique pour un véhicule électrique comprenant :
(i) une batterie comprenant une pluralité d'unités de gestion de batterie (BMU), et une pluralité de cellules de batterie ;
(ii) un relais de barre omnibus en raccordement électrique avec les cellules de batterie par l'intermédiaire d'au moins une liaison de batterie à barre omnibus ;
(iii) une pluralité de ports de charge,
(1) dans lequel chaque port de charge est configuré pour raccordement électrique au connecteur de charge de l'une des bornes de recharge ; et
(2) dans lequel le port de charge est directement connecté électriquement au connecteur de charge ou le port de charge est indirectement connecté électriquement au connecteur de charge par l'intermédiaire d'une ligne ombilicale ;
(iv) une pluralité de liaisons d'entrée de barre omnibus,
(1) dans lequel chaque liaison d'entrée de barre omnibus est connectée électriquement à l'un des ports de charge au niveau d'une première jonction et au relais de barre omnibus au niveau d'une deuxième jonction ; et
(2) dans lequel chaque liaison d'entrée de barre omnibus est en communication de données avec un module de communication véhicule électrique-ligne électrique (EV-PLC) positionné de façon adjacente à la liaison d'entrée de barre omnibus entre le port de charge associé à la liaison d'entrée de barre omnibus et le relais de barre omnibus ; et
(v) une unité de commande de batterie maîtresse (MBCU),
(1) dans lequel la MBCU est en communication de données avec une pluralité d'unités de commande de batterie (BCU), les BMU de la batterie, le relais de barre omnibus et un dispositif d'interface utilisateur ;
(2) dans lequel chaque BCU est appariée en communication de données avec l'un des EV-PLC pour établir une voie de communication BCU-vers-SECC pour la BCU lors d'un appariement en connexion du port de charge associé à la BCU et de l'un des connecteurs de charge ;
(3) dans lequel la voie de communication BCU-vers-SECC pour chaque BCU passe de la BCU à l'EV-PLC associé à la BCU, à la liaison d'entrée de barre omnibus associée à l'EV-PLC, au port de charge apparié en connexion associé à la liaison d'entrée de barre omnibus, au connecteur de charge apparié en connexion associé au port de charge apparié en connexion, à la ligne électrique associée au connecteur de charge apparié en connexion, au CP-PLC associé à la ligne électrique, et au SECC associé au CP-PLC ;
(4) dans lequel la MBCU est configurée pour :
(a) coordonner au moins deux sessions de charge indépendantes pendant chaque session de charge multiborne pour charger les cellules de batterie simultanément par l'intermédiaire d'au moins deux ports de charge selon un plan de charge multiborne ; et
(b) gérer chaque session de charge indépendante avec un échange de message de protocole indépendant par l'intermédiaire de chaque voie de communication BCU-vers-SECC, de la BCU de la voie de communication BCU-vers-SECC au SECC de la voie de communication BCU-vers-SECC, dans lequel chaque session de charge indépendante comprend une étape de démarrage, une étape de charge, et une étape de mise à l'arrêt conduite par l'intermédiaire de la voie de communication BCU-vers-SECC associée ; et
(5) dans lequel, pendant l'étape de démarrage de chaque session de charge indépendante, l'échange de message de protocole indépendant conduit par l'intermédiaire de la voie de communication BCU-vers-SECC comprend :
la délivrance de l'identifiant de véhicule du véhicule électrique de la BCU au SECC,
dans lequel le SECC transfère l'identifiant de véhicule à un serveur avec une demande d'autorisation pour la session de charge indépendante ;
dans lequel le serveur accède à l'enregistrement d'état de compte du véhicule associé à l'identifiant de véhicule pour, si cela est autorisé, émettre une approbation d'autorisation pour la session de charge indépendante ; et
dans lequel le retour du serveur délivre l'approbation d'autorisation au SECC ;
la délivrance d'un identifiant de port de charge pour la voie de communication BCU-vers-SECC ;
la délivrance en retour de l'approbation d'autorisation de la session de charge indépendante du SECC à la BCU ; et
la délivrance d'un ensemble de paramètres pour la borne de recharge associée à la voie de communication BCU-vers-SECC, chaque ensemble de paramètres comprenant une plage de tension de sortie et un courant de transfert maximal ;
et
(c) le serveur en communication de données avec le SECC de chaque borne de recharge par l'intermédiaire d'un réseau, le serveur comprenant une base de données comprenant une pluralité d'enregistrements de véhicule et une pluralité d'enregistrements de compteur,
(i) dans lequel chaque enregistrement de véhicule comprend, pour chacun d'une pluralité de véhicules, un identifiant de véhicule, un état de compte et au moins deux identifiants de port de charge pour le véhicule électrique ;
(ii) dans lequel chaque enregistrement de compteur identifie au moins un identifiant de véhicule et un résumé de session de charge pour chaque session de charge multiborne ; et
(iii) dans lequel le résumé de session de charge pour chaque session de charge multiborne comprend une liste des identifiants de port de charge pour les bornes de recharge utilisées dans la session de charge multiborne.

2. Système selon la revendication 1, dans lequel le dispositif d'interface utilisateur est intégré dans une unité de commande de véhicule du véhicule électrique.

3. Système selon la revendication 1, dans lequel la session de charge multiborne est conduite sans aucune communication de données entre les bornes de recharge utilisées dans la session de charge multiborne.

4. Système selon la revendication 1,
(a) dans lequel la MBCU est en communication de données avec les BMU par l'intermédiaire de l'une des BCU ;
(b) dans lequel, pendant l'étape de démarrage, la MBCU ou le dispositif d'interface utilisateur conduit une vérification de sécurité initiale à partir d'informations de capteur reçues par la MBCU depuis les BMU et une pluralité de capteurs de barre omnibus ; et
(c) dans lequel, pendant l'étape de charge, la MBCU ou le dispositif d'interface utilisateur conduit une évaluation de sécurité continue à partir des informations de capteur reçues par la MBCU depuis les BMU et les capteurs de barre omnibus.

5. Système selon la revendication 4,
dans lequel les capteurs de barre omnibus comprennent au moins l'un parmi :
(a) un capteur de détection d'isolation ;
(b) un compteur de courant ; et
(c) un capteur de température.

6. Système selon la revendication 1,
(a) dans lequel le dispositif d'interface utilisateur est en communication de données avec le serveur par l'intermédiaire du réseau ; et
(b) dans lequel le dispositif d'interface utilisateur est configuré pour assembler le plan de charge multiborne à partir d'au moins l'un parmi :
(i) un plan de charge personnalisé calculé à partir de :
(1) les ensembles de paramètres reçus depuis les bornes de recharge associées aux voies de communication BCU-vers-SECC achevant avec succès l'étape de démarrage, comprenant la plage de tension de sortie et le courant de transfert maximal pour chaque borne de recharge ;
(2) un stockage d'électricité initial de la batterie ;
(3) un stockage d'électricité cible de la batterie ; et
(4) un ensemble de limites de sécurité pour le système de véhicule électrique ;
(ii) un plan de charge préconfiguré pour les bornes de recharge, dans lequel le plan de charge préconfiguré est accessible depuis le serveur par l'intermédiaire du dispositif d'interface utilisateur ; et
(iii) un plan de charge multiborne antérieur précédemment exécuté avec succès par le véhicule électrique.

7. Système selon la revendication 6,
(a) dans lequel une simulation de sécurité du plan de charge multiborne est conduite par le dispositif d'interface utilisateur ou le serveur avant l'étape de charge ;
(b) dans lequel chaque plan de charge multiborne comprend un protocole de mise à l'arrêt d'urgence ;
(c) dans lequel le commencement de l'étape de charge nécessite un examen et une autorisation préalables par l'intermédiaire du dispositif d'interface utilisateur du plan de charge multiborne par un utilisateur authentifié du véhicule électrique ; et
(d) dans lequel le dispositif d'interface utilisateur ou le serveur stocke un journal d'informations de capteur pour chaque session de charge multiborne.

8. Procédé mis en oeuvre par ordinateur pour la commande côté véhicule d'une session de charge multiborne, le procédé comprenant les étapes de
(a) maintien d'une pluralité de bornes de recharge, chaque borne de recharge comprenant :
(i) une ligne électrique connectée électriquement à un connecteur d'alimentation à une première extrémité et à un connecteur de charge à a deuxième extrémité,
(1) dans lequel la ligne électrique peut être raccordée à une ligne secteur ;
(2) dans lequel la ligne électrique comprend un commutateur à relais positionné entre le connecteur d'alimentation et le connecteur de charge ; et
(3) dans lequel un module de communication borne de recharge-ligne électrique (CP-PLC) est positionné de façon adjacente à la ligne électrique entre le commutateur à relais et le connecteur de charge ; et
(ii) un contrôleur de communication d'équipement de distribution (SECC),
(1) dans lequel le SECC est en communication de données avec le commutateur à relais et le CP-PLC ; et
(2) dans lequel un courant peut circuler de la ligne secteur au connecteur de charge par l'intermédiaire de la ligne électrique, lors de l'activation du commutateur à relais par le SECC ;
(b) le maintien d'un système de véhicule électrique pour un véhicule électrique comprenant :
(i) une batterie comprenant une pluralité d'unités de gestion de batterie (BMU), et une pluralité de cellules de batterie ;
(ii) un relais de barre omnibus en raccordement électrique avec les cellules de batterie par l'intermédiaire d'au moins une liaison de batterie à barre omnibus ;
(iii) une pluralité de ports de charge,
(1) dans lequel chaque port de charge est configuré pour raccordement électrique au connecteur de charge de l'une des bornes de recharge ; et
(2) dans lequel le port de charge est directement connecté électriquement au connecteur de charge ou le port de charge est indirectement connecté électriquement au connecteur de charge par l'intermédiaire d'une ligne ombilicale ;
(iv) une pluralité de liaisons d'entrée de barre omnibus,
(1) dans lequel chaque liaison d'entrée de barre omnibus est connectée électriquement à l'un des ports de charge au niveau d'une première jonction et au relais de barre omnibus au niveau d'une deuxième jonction ; et
(2) dans lequel chaque liaison d'entrée de barre omnibus est en communication de données avec un module de communication véhicule électrique-ligne électrique (EV-PLC) positionné de façon adjacente à la liaison d'entrée de barre omnibus entre le port de charge associé à la liaison d'entrée de barre omnibus et le relais de barre omnibus ; et
(v) une unité de commande de batterie maîtresse (MBCU),
(1) dans lequel la MBCU est en communication de données avec une pluralité d'unités de commande de batterie (BCU), les BMU de la batterie, le relais de barre omnibus et un dispositif d'interface utilisateur ;
(2) dans lequel chaque BCU est appariée en communication de données avec l'un des EV-PLC pour établir une voie de communication BCU-vers-SECC pour la BCU lors d'un appariement en connexion du port de charge associé à la BCU et de l'un des connecteurs de charge ; et
(3) dans lequel la voie de communication BCU-vers-SECC pour chaque BCU passe de la BCU à l'EV-PLC associé à la BCU, à la liaison d'entrée de barre omnibus associée à l'EV-PLC, au port de charge apparié en connexion associé à la liaison d'entrée de barre omnibus, au connecteur de charge apparié en connexion associé au port de charge apparié en connexion, à la ligne électrique associée au connecteur de charge apparié en connexion, au CP-PLC associé à la ligne électrique, et au SECC associé au CP-PLC ;
(c) coordination avec la MBCU d'au moins deux sessions de charge indépendantes pendant chaque session de charge multiborne pour charger les cellules de batterie simultanément par l'intermédiaire d'au moins deux ports de charge selon un plan de charge multiborne ; et
(d) la gestion avec la MBCU de chaque session de charge indépendante avec un échange de message de protocole indépendant par l'intermédiaire de chaque voie de communication BCU-vers-SECC, de la BCU de la voie de communication BCU-vers-SECC au SECC de la voie de communication BCU-vers-SECC, dans lequel chaque session de charge indépendante comprend une étape de démarrage, une étape de charge, et une étape de mise à l'arrêt conduite par l'intermédiaire de la voie de communication BCU-vers-SECC associée ;
dans lequel, pendant l'étape de démarrage de chaque session de charge indépendante, l'échange de message de protocole indépendant conduit par l'intermédiaire de la voie de communication BCU-vers-SECC comprend :
la délivrance de l'identifiant de véhicule du véhicule électrique de la BCU au SECC,
dans lequel le SECC transfère l'identifiant de véhicule à un serveur avec une demande d'autorisation pour la session de charge indépendante ;
dans lequel le serveur accède à l'enregistrement d'état de compte du véhicule associé à l'identifiant de véhicule pour, si cela est autorisé, émettre une approbation d'autorisation pour la session de charge indépendante ; et
dans lequel le retour du serveur délivre l'approbation d'autorisation au SECC ;
la délivrance d'un identifiant de port de charge pour la voie de communication BCU-vers-SECC ;
la délivrance en retour de l'approbation d'autorisation de la session de charge indépendante du SECC à la BCU ; et
la délivrance d'un ensemble de paramètres pour la borne de recharge associée à la voie de communication BCU-vers-SECC, chaque ensemble de paramètres comprenant une plage de tension de sortie et un courant de transfert maximal ;
et
(e) le maintien du serveur en communication de données avec le SECC de chaque borne de recharge par l'intermédiaire d'un réseau, le serveur comprenant une base de données comprenant une pluralité d'enregistrements de véhicule et une pluralité d'enregistrements de compteur,
dans lequel chaque enregistrement de véhicule comprend, pour chacun d'une pluralité de véhicules, un identifiant de véhicule, un état de compte et au moins deux identifiants de port de charge pour le véhicule électrique ;
dans lequel chaque enregistrement de compteur identifie au moins un identifiant de véhicule et un résumé de session de charge pour chaque session de charge multiborne ; et
dans lequel le résumé de session de charge pour chaque session de charge multiborne comprend une liste des identifiants de port de charge pour les bornes de recharge utilisées dans la session de charge multiborne.

9. Procédé selon la revendication 8, dans lequel le dispositif d'interface utilisateur est intégré dans une unité de commande de véhicule du véhicule électrique.

10. Procédé selon la revendication 8, dans lequel la session de charge multiborne est conduite sans aucune communication de données entre les bornes de recharge utilisées dans la session de charge multiborne.

11. Procédé selon la revendication 8 :
(a) dans lequel la MBCU est en communication de données avec les BMU par l'intermédiaire de l'une des BCU ;
(b) dans lequel, pendant l'étape de démarrage, la MBCU ou le dispositif d'interface utilisateur conduit une vérification de sécurité initiale à partir d'informations de capteur reçues par la MBCU depuis les BMU et une pluralité de capteurs de barre omnibus ; et
(c) dans lequel, pendant l'étape de charge, la MBCU ou le dispositif d'interface utilisateur conduit une évaluation de sécurité continue à partir des informations de capteur reçues par la MBCU depuis les BMU et les capteurs de barre omnibus.

12. Procédé selon la revendication 11, dans lequel les capteurs de barre omnibus comprennent au moins l'un parmi :
(a) un capteur de détection d'isolation ;
(b) un compteur de courant ; et
(c) un capteur de température.

13. Procédé selon la revendication 8,
(a) dans lequel le dispositif d'interface utilisateur est en communication de données avec le serveur par l'intermédiaire du réseau ; et
(b) dans lequel le dispositif d'interface utilisateur est configuré pour assembler le plan de charge multiborne à partir d'au moins l'un parmi :
(i) un plan de charge personnalisé calculé à partir de :
(1) les ensembles de paramètres reçus depuis les bornes de recharge associées aux voies de communication BCU-vers-SECC achevant avec succès l'étape de démarrage, comprenant la plage de tension de sortie et le courant de transfert maximal pour chaque borne de recharge ;
(2) un stockage d'électricité initial de la batterie ;
(3) un stockage d'électricité cible de la batterie ; et
(4) un ensemble de limites de sécurité pour le système de véhicule électrique ;
(ii) un plan de charge préconfiguré pour les bornes de recharge, dans lequel le plan de charge préconfiguré est accessible depuis le serveur par l'intermédiaire du dispositif d'interface utilisateur ; et
(iii) un plan de charge multiborne antérieur précédemment exécuté avec succès par le véhicule électrique.

14. Procédé selon la revendication 13,
(a) dans lequel une simulation de sécurité du plan de charge multiborne est conduite par le dispositif d'interface utilisateur ou le serveur avant l'étape de charge ;
(b) dans lequel chaque plan de charge multiborne comprend un protocole de mise à l'arrêt d'urgence ;
(c) dans lequel le commencement de l'étape de charge nécessite un examen et une autorisation préalables par l'intermédiaire du dispositif d'interface utilisateur du plan de charge multiborne par un utilisateur authentifié du véhicule électrique ; et
(d) dans lequel le dispositif d'interface utilisateur ou le serveur stocke un journal d'informations de capteur pour chaque session de charge multiborne.
